(19) Europäisches Patentamt
European Patent Office
Office européen des brevets

(11) EP 3 516 028 B1

(12) # EUROPÄISCHE PATENTSCHRIFT

(45) Veröffentlichungstag und Bekanntmachung des Hinweises auf die Patenterteilung:
**08.06.2022 Patentblatt 2022/23**

(21) Anmeldenummer: **17781415.9**

(22) Anmeldetag: **22.09.2017**

(51) Internationale Patentklassifikation (IPC):
***C11D 1/14*** *(2006.01)* ***C11D 1/22*** *(2006.01)*
***C11D 3/12*** *(2006.01)* ***C11D 3/20*** *(2006.01)*
***C11D 3/37*** *(2006.01)* ***C11D 3/50*** *(2006.01)*
***C11D 11/00*** *(2006.01)* ***C11D 17/06*** *(2006.01)*
***C08K 3/36*** *(2006.01)*

(52) Gemeinsame Patentklassifikation (CPC):
**C11D 11/0082; C08K 3/36; C11D 3/046; C11D 3/124; C11D 3/1253; C11D 3/3707; C11D 3/505**

(86) Internationale Anmeldenummer:
**PCT/EP2017/074095**

(87) Internationale Veröffentlichungsnummer:
**WO 2018/055107 (29.03.2018 Gazette 2018/13)**

(54) **SCHMELZDISPERSIONSZUSAMMENSETZUNG MIT TEMPERATURUNABHÄNGIGER VISKOSITÄT**

MELT DISPERSION COMPOSITION WITH TEMPERATURE-INDEPENDENT VISCOSITY

COMPOSITION DISPERSIBLE FUSIBLE AYANT UNE VISCOSITÉ INDÉPENDANTE DE LA TEMPÉRATURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:
**26.09.2016 DE 102016218480**
**26.09.2016 DE 102016218481**
**26.09.2016 DE 102016218482**
**05.10.2016 DE 102016219290**
**05.10.2016 DE 102016219292**
**05.10.2016 DE 102016219296**
**05.10.2016 DE 102016219293**
**07.10.2016 DE 102016219570**
**03.03.2017 DE 102017203494**
**03.03.2017 DE 102017203502**
**03.03.2017 DE 102017203505**
**03.03.2017 DE 102017203500**
**03.03.2017 DE 102017203501**
**28.07.2017 DE 102017007096**

(43) Veröffentlichungstag der Anmeldung:
**31.07.2019 Patentblatt 2019/31**

(73) Patentinhaber: **Henkel AG & Co. KGaA**
**40589 Düsseldorf (DE)**

(72) Erfinder:
- **HOLDERBAUM, Thomas**
**40723 Hilden (DE)**
- **SCHMIEDEL, Peter**
**40591 Düsseldorf (DE)**
- **PANZICA, Danilo**
**40721 Hilden (DE)**
- **SEGLER, Tobias**
**40589 Düsseldorf (DE)**
- **VÖLKER, Michael**
**41379 Brüggen (DE)**
- **HORN, Michael**
**40470 Düsseldorf (DE)**
- **SCHMIDT, Hans-Joachim**
**44141 Dortmund (DE)**
- **VICTOR, Peter**
**41470 Neuss (DE)**
- **TREBBE, Uwe**
**40219 Düsseldorf (DE)**
- **RICHTER, Bernd**
**58644 Iserlohn (DE)**
- **STEHR, Regina**
**41468 Neuss (DE)**
- **LUNEAU, Benôit**
**40885 Ratinger (DE)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 516 028 B1

- **NICKEL, Dieter**
  **50259 Pulheim (DE)**
- **DREJA, Michael**
  **41469 Neuss (DE)**
- **LARSON, Bernd**
  **41812 Erkelenz (DE)**
- **YAPICI, Filiz**
  **404231 Düsseldorf (DE)**
- **SUBINYA, Mireia**
  **74252 Massenbachhausen (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**


(56) Entgegenhaltungen:

| | |
|---|---|
| **EP-A1- 0 266 796** | **WO-A1-97/49381** |
| **WO-A1-2009/135928** | **WO-A1-2014/099879** |
| **WO-A2-2009/133163** | **US-A1- 2008 131 695** |

## Beschreibung

Die vorliegende Erfindung betrifft ein Verfahren zur Herstellung von festen, partikulären Zusammensetzungen, wobei eine wasserlösliche oder wasserdispergierbare Schmelzdispersionszusammensetzung eingesetzt wird, die dadurch gekennzeichnet, dass die Zusammensetzung mindestens ein wasserlösliches oder wasserdispergierbares Trägerpolymer mit einem Erstarrungspunkt >30°C bis 250°C, ausgewählt aus Polyethylenglykol aufweist und die Zusammensetzung im Temperaturbereich bis 20°C oberhalb des Erstarrungspunktes eine relative Temperaturabhängigkeit der Viskosität v im Bereich von -2,0 %/°C bis +2,0 %/°C aufweist. Die Zusammensetzung zeichnet sich dadurch aus, dass sie als Schmelzdispersionszusammensetzung eine nahezu temperaturunabhängige Viskosität aufweist. In einem weiteren Aspekt betrifft die vorliegende Erfindung feste, partikuläre Zusammensetzungen, die aus solchen Verfahren gewonnen worden sind. Darüber hinaus betrifft die vorliegende Erfindung auch die Verwendung einer solchen erfindungsgemäßen festen, partikulären Zusammensetzung als Textilpflegemittel, vorzugsweise Beduftungsmittel und/oder Weichspüler, zum Beduften und/oder Konditionieren von textilen Flächengebilden. In einem weiteren Aspekt betrifft die Erfindung Wasch- oder Reinigungsmittel, umfassend eine erfindungsgemäße feste, partikuläre Zusammensetzung.

Bei der Anwendung von Wasch- und Reinigungsmitteln verfolgt der Verbraucher nicht nur das Ziel, die zu behandelnden Objekte zu waschen, zu reinigen oder zu pflegen, sondern er wünscht sich auch, dass die behandelten Objekte, wie z.B. Textilien, nach der Behandlung, beispielsweise nach der Wäsche, angenehm riechen. Insbesondere aus diesem Grunde enthalten die meisten kommerziell verfügbaren Wasch- und Reinigungsmittel Duftstoffe.

Oftmals werden Duftstoffe in Form von Duftstoffpartikeln entweder als integraler Bestandteil eines Wasch- oder Reinigungsmittels verwendet, oder aber direkt zu Beginn eines Waschgangs in separater Form in die Waschtrommel dosiert. Auf diese Weise kann der Verbraucher durch individuelle Dosierung die Beduftung der zu waschenden Wäsche kontrollieren.

Bei dem Hauptbestandteil derartiger im Stand der Technik bekannter Duftpastillen handelt es sich um ein wasserlösliches oder zumindest wasserdispergierbares Trägerpolymer, welches als Vehikel für die integrierten Duftstoffe dient und welches sich im Zuge des Wachsvorgangs in der Waschflotte mehr oder weniger vollständig auflöst, um so die enthaltenen Duftstoffe sowie gegebenenfalls weitere Komponenten in die Waschflotte zu entlassen. Zumeist handelt es sich bei einem solchen Trägerpolymer um ein Polyethylenglykol mit einem mittleren Molekulargewicht von ungefähr 2000 bis 12.000 g/mol und einem geeigneten Schmelzpunkt, beispielsweise im Bereich von 30 °C bis 70 °C. Für die Herstellung der bekannten Duftpastillen wird aus dem Trägerpolymer eine Schmelze erzeugt, die die übrigen Inhaltsstoffe enthält bzw. diese dann hinzugefügt werden, und die erhaltene Schmelze wird dann einem Formgebungsverfahren zugeführt, in dessen Verlauf sie abkühlt, dabei erstarrt und die gewünschte Form einnimmt.

Es ist immer oberstes Ziel, möglichst einheitliche, d.h. größengleiche Duftpastillen herzustellen Es wurde überraschend herausgefunden, dass trotz der hohen Prozessrate in einer Pastillierungsanlage und der damit kurzen Verweilzeit der Schmelze in der Apparatur schon kleine Temperaturschwankungen, die im Verlaufe der Herstellung unweigerlich auftreten können, einen unerwartet starken Einfluss auf die Gestalt, nämlich die Geometrie und/oder Größe des Produkts haben. Es können unerwünschte, unförmige Produkte erhalten werden. Unförmige Produkte sind aber vom Verbraucher unerwünscht, da sie weder gut dosierbar noch ästhetisch schön anzusehen sind. Andererseits können zu niedrige Temperaturen dafür sorgen, dass Produktklumpen in der Apparatur entstehen, die letztendlich die Produktion zu Stillstand bringen und einen hohen Reinigungsaufwand verursachen.

Es gibt im Stand der Technik Bestrebungen, diese Probleme durch apparative Maßnahmen zu lösen. Damit sind jedoch erhebliche Investments verbunden.

In den internationalen Anmeldungen WO 2009/133163A1 und WO 2009/135928 A1 werden Polyvinylbutyral Folien beschrieben, welche als Zusatzstoff pyrogene Kieselsäure enthalten.

Die Anmeldungen WO 97/49381A1, EP 266796 A1 und US 2008/013169 A1 beschreiben Aktivstoffhaltige partikuläre Zusammensetzungen auf Grundlage eines Polyethylenglycol-Trägermaterials.

In der internationalen Patentanmeldung WO 2014/099879 A1 werden schließlich Textilbehandlungsmittel beschrieben, welche eine Vielzahl schmelzbarer Duftstoff-haltiger Pastillen umfassen.

Aufgabe der vorliegenden Erfindung war es daher, eine Zusammensetzung zu identifizieren, welche sich einfach, verlässlich und ökonomisch herstellen lässt, ohne wie sonst üblich apparativ Maßnahmen für eine stabile und zuverlässige Produktion ergreifen zu müssen.

Die Erfinder haben überraschend herausgefunden, dass sich diese Aufgabe mittels eines Verfahrens gemäß Anspruch 1 und mittels dieses Verfahrens hergestellter fester, partikulärer Zusammensetzungen lösen lässt.

Figuren 1 bis 3 zeigen exemplarisch für drei verschiedene Schmelzdispersionszusammensetzungen, dass die relative Temperaturabhängigkeit der Viskosität v im Bereich von -2,0 %/°C bis +2,0 %/°C liegt.

Diese Schmelzdispersionszusammensetzungen weisen einen Schmelzbereich auf, der geeignet ist, um sensible Stoffe, wie zum Beispiel Parfüm oder Parfümduftkapseln einzuarbeiten, ohne diese Stoffe zu schädigen. Gleichzeitig weisen sie praktisch keine Temperaturabhängigkeit der Viskosität in den üblichen Temperaturbereichen, in denen gearbeitet wird, auf. Dadurch kann die Schmelze einfach und verlässlich mit den üblichen Pastillierungs- und Vertropfungsanlagen verarbeitet werden. Außerordentlich gleichmäßige und optisch ansprechende feste, partikuläre Zusammensetzungen werden erhalten. Diese lassen sich gut in Waschmitteln einarbeiten und vom Verbraucher gut dosieren.

In einem ersten Aspekt betrifft die vorliegende Erfindung Verfahren zur Herstellung einer festen, partikulären Zusammensetzung, dadurch gekennzeichnet, dass eine Schmelzdispersionszusammensetzung gemäß der vorliegenden Erfindung erstarrt wird.

In einem weiteren Aspekt betrifft die vorliegende Erfindung eine feste, partikuläre Zusammensetzung, dadurch gekennzeichnet, dass sie gemäß einem erfindungsgemäßen Verfahren hergestellt worden ist.

In einem weiteren Aspekt betrifft die vorliegende Erfindung die Verwendung der erfindungsgemäßen festen, partikulären Zusammensetzung als Textilpflegemittel, vorzugsweise Beduftungsmittel und/oder Weichspüler, zum Beduften und/oder Konditionieren von textilen Flächengebilden.

In einem weiteren Aspekt betrifft die vorliegende Erfindung Wasch- oder Reinigungsmittel, umfassend eine erfindungsgemäße feste, partikuläre Zusammensetzung.

Diese und weitere Aspekte, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Ferner ist es selbstverständlich, dass die hierin enthaltenen Beispiele die Erfindung beschreiben und veranschaulichen sollen, diese aber nicht einschränken und insbesondere die Erfindung nicht auf diese Beispiele beschränkt ist.

Alle Prozentangaben sind, sofern nicht anders angegeben, Gewichts-%. Numerische Bereiche, die in dem Format "von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

"Mindestens ein", wie hierin verwendet, bezieht sich auf 1 oder mehr, beispielsweise 1, 2, 3, 4, 5, 6, 7, 8, 9 oder mehr. Insbesondere bezieht sich diese Angabe auf die Art des Mittels/der Verbindung und nicht die absolute Zahl der Moleküle. "Mindestens ein Duftstoff", bedeutet daher, dass mindestens eine Art von Duftstoff erfasst wird, aber auch 2 oder mehr verschiedene Arten von Duftstoffen enthalten sein können.

"Etwa" oder "ungefähr", wie hierin im Zusammenhang mit einem Zahlenwert verwendet, bedeutet den Zahlenwert ±10%, vorzugsweise ±5%. Ein Molekulargewicht von etwa 6000 g/mol bedeutet somit 5400-6600 g/mol, vorzugsweise 5700-6300 g/mol.

"Wasserlöslich", wie hierin verwendet, bedeutet eine Löslichkeit in Wasser bei 20°C von mindestens 1 g/L, vorzugsweise mindestens 10 g/L, noch bevorzugter mindestens 50 g/L.

"Wasserdispergierbar", wie hierin verwendet, bedeutet, dass sich das Trägerpolymer mit bekannten Verfahren in Wasser bei einer Temperatur von 20°C dispergieren lässt.

Wenn hierin Bezug auf eine Zusammensetzung genommen wird, ist damit sowohl die Schmelzdispersionszusammensetzung als auf die feste, partikuläre Zusammensetzung gemeint.

Die feste, partikuläre Zusammensetzung, wie sie hierin beschrieben wird, wird aus einer Schmelzdispersionszusammensetzung hergestellt. Wenn also im Folgenden auf die feste, partikuläre Zusammensetzung Bezug genommen wird, ist immer auch die entsprechende Schmelze/Schmelzdispersion, aus welcher dieser erhältlich ist, erfasst. Da sich diese mit Ausnahme des Aggregatzustands von der Zusammensetzung her nicht unterscheiden, werden die Begriffe hierin synonym verwendet. Dies gilt auch umgekehrt.

Die hierin beschriebenen Zusammensetzungen zeichnen sich dadurch aus, dass sie als Schmelzdispersionszusammensetzungen eine Viskosität aufweisen, die von der Temperatur nur wenig beeinflusst wird. Die dabei betrachteten Temperaturbereiche sind solche, bei denen die Zusammensetzung als Schmelze vorliegt, d.h. Temperaturen über dem Schmelzpunkt des Trägerpolymers. Kern der Erfindung ist, dass in einem Temperaturbereich von nicht mehr als 20°C über dem Erstarrungspunkt des Trägerpolymers die temperaturstabile Viskosität gewählt wird. Übliche Erstarrungstemperaturbereiche sind >40 bis 100 °C, beispielsweise 50 bis 70°C.

Die Viskosität der hierin beschriebenen Schmelzdispersionszusammensetzungen weisen eine relative Temperaturabhängigkeit der Viskosität v im Bereich von,-2,0 %/°C bis +2,0 %/°C vorzugsweise -1,5 %/°C bis +1,5 %/°C, noch mehr bevorzugt -1,0 %/°C bis +1,0 %/°C auf.

Die relative Temperaturabhängigkeit der Viskosität wird im Rahmen der vorliegenden Erfindung mit v bezeichnet.

$$\nu = 1/\eta * d\eta /dT$$

$\eta$ = Dynamische Viskosität der Schmelzdispersion in Pa*s

$d\eta/dT$= bezeichnet die differentielle Viskositätsänderung mit der Temperatur, ablesbar aus der Steigung der Kurve der Viskosität als Funktion der Temperatur im Temperaturbereich bis 20°C oberhalb des Schmelzpunktes.

Die Viskosität wird mit dem Rheometer TA-Instruments AR G2, Platte-Platte-Messystem, 40 mm mit 1100 µm Plattenabstand, Scherrate 10 $s^{-1}$, 2,5°C/min Abkühlrate bestimmt.

Unter einer Schmelzdispersion wird im Rahmen der vorliegenden Erfindung ein disperses System von Feststoffpartikeln in einem bei Raumtemperatur festen, in den erfindungsgemäßen Grenzen aber geschmolzenen Trägerpolymer verstanden. Als Schmelze wird ein solches System bei Temperaturen oberhalb des Schmelzpunktes des Trägerpolymers verstanden.

Bei der Hauptkomponente der wie hierin beschrieben Schmelzdispersionszusammensetzung und der partikulären, festen Zusammensetzung handelt es sich um mindestens ein wasserlösliches oder wasserdispergierbares, vorzugsweise wasserlösliches,Trägerpolymer.

In verschiedenen Ausführungsformen zeichnet sich das mindestens eine Trägerpolymer dadurch aus, dass es einen Erstarrungspunkt von 48°C bis 120°C, vorzugsweise von 48°C bis 80°C aufweist.

In verschiedenen bevorzugten Ausführungsformen ist das mindestens eine Trägerpolymer ausgewählt aus Polyalkylenglykolen.

Im Kontext der vorliegenden Erfindung sind solche Polyalkylenglykole geeignet, die ein mittleres Molekulargewicht ($M_n$) von >1000 g/mol, insbesondere >1500 g/mol, vorzugsweise ein mittleres Molekulargewicht zwischen 3.000 und 15.000, noch bevorzugter ein mittleres Molekulargewicht zwischen 4.000 und 13.000, weiter bevorzugt ein mittleres Molekulargewicht zwischen 4000 und 6000, 6000 und 8000 oder 9.000 und 12.000 und insbesondere bevorzugt von etwa 4000 oder etwa 6000 g/mol aufweisen.

Wenn im Rahmen dieser Anmeldung von "mittlerem Molekulargewicht von Polyalkylenglykolen" gesprochen wird, so beziehen sich diese Angaben jeweils auf die zahlenmittleren Molekulargewichte ($M_n$), die sich rechnerisch aus der OH-Zahl gemessen gemäß DIN 53240-1, insbesondere DIN 53240-1:2012-07, ergeben.

Gemäß der vorliegenden Erfindung sind insbesondere solche Polyalkylglykole geeignet, die einen Erstarrungspunkt zwischen 40 °C und 90 °C aufweisen, insbesondere im Bereich von 45 bis 70°C. Beispiele für Polyalkylenglykole, die im Kontext der vorliegenden Erfindung geeignet sind, sind Polypropylenglykol und Polyethylenglykol.

Gemäß einigen Ausführungsformen handelt es sich bei dem mindestens einen Trägerpolymer vorzugsweise um Polyethylenglykol.

In einigen Ausführungsformen handelt es sich bei dem mindestens einen Trägerpolymer um ein Polyethylenglykol mit einem mittleren Molekulargewicht (Mn) von >1500 g/mol, vorzugsweise einem mittleren Molekulargewicht zwischen 3.000 und 15.000, noch bevorzugter mit einem mittleren Molekulargewicht zwischen 4.000 und 13.000, weiter bevorzugt ein mittleres Molekulargewicht zwischen 4000 und 6000, 6000 und 8000 oder 9.000 und 12.000 und insbesondere bevorzugt von etwa 4000 oder etwa 6000 g/mol aufweisen. In einigen Ausführungsformen zeichnet sich ein solches Polyethylenglykol durch einen Schmelzpunkt im Bereich von 45 bis 70°C, vorzugsweise 50 bis 65°C aus, noch bevorzugter 50 bis 60°C.

In verschiedenen Ausführungsformen wird das mindestens eine Trägerpolymer in einer Menge eingesetzt, dass die Schmelzdispersionszusammensetzung, von 50 bis 78 Gew.-%, vorzugsweise von 60 bis 78 Gew.-%, beispielsweise 65 bis 75 Gew.-%, basierend auf dem Gesamtgewicht der Zusammensetzung, des Trägerpolymers enthält.

Eine weitere Komponente der wie hierin beschriebenen, partikulären festen Zusammensetzung ist mindestens ein Duftstoff. Bei einem Duftstoff handelt es sich um eine den Geruchsinn anregende, chemische Substanz. Um den Geruchssinn anregen zu können, sollte die chemische Substanz zumindest teilweise in der Luft verteilbar sein, d.h. der Duftstoff sollte bei 25°C zumindest in geringem Maße flüchtig sein. Ist der Duftstoff nun sehr flüchtig, klingt die Geruchsintensität dann schnell wieder ab. Bei einer geringeren Flüchtigkeit ist der Gerucheindruck jedoch nachhaltiger, d.h. er verschwindet nicht so schnell. In einer Ausführungsform weist der Duftstoff daher einen Schmelzpunkt auf, der im Bereich von -100°C bis 100°C, bevorzugt von -80°C bis 80°C, noch bevorzugter von -20°C bis 50°C, insbesondere von -30°C bis 20°C liegt. In einer weiteren Ausführungsform weist der Duftstoff einen Siedepunkt auf, der im Bereich von 25°C bis 400°C, bevorzugt von 50°C bis 380°C, mehr bevorzugt von 75°C bis 350°C, insbesondere von 100°C bis 330°C liegt.

Insgesamt sollte eine chemische Substanz eine bestimmte Molekülmasse nicht überschreiten, um als Duftstoff zu fungieren, da bei zu hoher Molekülmasse die erforderliche Flüchtigkeit nicht mehr gewährleitstet werden kann. In einer Ausführungsform weist der Duftstoff eine Molekülmasse von 40 bis 700 g/mol, noch bevorzugter von 60 bis 400 g/mol auf.

Der Geruch eines Duftstoffes wird von den meisten Menschen als angenehm empfunden und entspricht häufig dem Geruch nach beispielsweise Blüten, Früchten, Gewürzen, Rinde, Harz, Blättern, Gräsern, Moosen und Wurzeln. So können Duftstoffe auch dazu verwendet werden, um unangenehme Gerüche zu überlagern oder aber auch um einen nicht riechenden Stoff mit einem gewünschten Geruch zu versehen. Als Duftstoffe können einzelne Riechstoffverbindungen, z.B. die synthetischen Produkte vom Typ der Ester, Ether, Aldehyde, Ketone, Alkohole und Kohlenwasserstoffe verwendet werden.

Duftstoffverbindungen vom Typ der Aldehyde sind beispielsweise Adoxal (2,6,10-Trimethyl-9-undecenal), Anisaldehyd (4-Methoxybenzaldehyd), Cymal (3-(4-Isopropyl-phenyl)-2-methylpropanal), Ethylvanillin, Florhydral (3-(3-isopropylphenyl)butanal), Helional (3-(3,4-Methylendioxyphenyl)-2-methylpropanal), Heliotropin, Hydroxycitronellal, Lauraldehyd, Lyral (3- und 4-(4-Hydroxy-4-methylpentyl)-3- cyclohexen-1-carboxaldehyd), Methylnonylacetaldehyd, Lilial (3-(4-tert-Butylphenyl)-2-methylpropanal), Phenylacetaldehyd, Undecylenaldehyd, Vanillin, 2,6,10-Trimethyl-9-undecenal, 3-Dodecen-1-al, alpha-n-Amylzimtaldehyd, Melonal (2,6-Dimethyl-5-heptenal), 2,4-Di-methyl-3-cyclohexen-1-carboxaldehyd (Triplal), 4-Methoxybenzaldehyd, Benzaldehyd, 3-(4-tert- Butylphenyl)-propanal, 2-Methyl-3-(para-methoxyphenyl)propanal, 2-Methyl-4-(2,6,6-timethyl-2(1)-cyclohexen-1-yl)butanal, 3-Phenyl-2-propenal, cis-/trans-3,7-Dimethyl-2,6-octadien-1-al, 3,7-Dimethyl-6-octen-1-al, [(3,7-Dimethyl-6-octenyl)oxy]acetaldehyd, 4-Isopropylbenzylaldehyd, 1,2,3,4,5,6,7,8-Octahydro-8,8-dimethyl-2-naphthaldehyd, 2,4-Dimethyl-3-cyclohexen-1-carboxaldehyd, 2-Methyl-3-(isopropylphenyl)propanal, 1-Decanal, 2,6-Dimethyl-5-heptenal, 4-(Tricyclo[5.2.1.0(2,6)]-decyliden-8)-butanal, Octahydro-4,7-methan-1H-indencarboxaldehyd, 3-Ethoxy-4-hydroxybenzaldehyd, para-Ethyl-alpha,alpha-dimethylhydrozimtaldehyd, alpha-Methyl-3,4-(methylendioxy)-hydrozimtaldehyd, 3,4-Methylendioxybenzaldehyd, alpha-n-Hexylzimtaldehyd, m-Cymen-7-carboxaldehyd, alpha-Methylphenylacetaldehyd, 7-Hydroxy-3,7-dimethyloctanal, Undecenal, 2,4,6-Trimethyl-3-cyclohexen-1-carboxaldehyd, 4-(3)(4-Methyl-3-pentenyl)-3-cyclohexencarboxaldehyd, 1-Dodecanal, 2,4-Dimethylcyclohexen-3-carboxaldehyd, 4-(4-Hydroxy-4-methylpentyl)-3-cylohexen-1-carboxaldehyd, 7-Methoxy-3,7-dimethyloctan-1-al, 2-Methyl- undecanal, 2-Methyldecanal, 1-Nonanal, 1-Octanal, 2,6,10-Trimethyl-5,9-undecadienal, 2-Methyl-3-(4-tert-butyl)propanal, Dihydrozimtaldehyd, 1-Methyl-4-(4-methyl-3-pentenyl)-3-cyclohexen-1-carboxaldehyd, 5- oder 6-Methoxyhexahydro-4,7-methanindan-1- oder -2-carboxaldehyd, 3,7-Dimethyloctan-1-al, 1-Undecanal, 10-Undecen-1-al, 4-Hydroxy-3-methoxybenzaldehyd, 1-Methyl-3-(4-methylpentyl)-3-cyclohexencarboxaldehyd, 7-Hydroxy-3J-dimethyl-octanal, trans-4-Decenal, 2,6-Nonadienal, para-Tolylacetaldehyd, 4-Methylphenylacetaldehyd, 2-Methyl-4-(2,6,6-trimethyl-1-cyclohexen-1-yl)-2-butenal, ortho-Methoxyzimtaldehyd, 3,5,6-Trimethyl-3-cyclohexen- carboxaldehyd, 3J-Dimethyl-2-methylen-6-octenal, Phenoxyacetaldehyd, 5,9-Dimethyl-4,8- decadienal, Päonienaldehyd (6,10-Dimethyl-3-oxa-5,9-undecadien-1-al), Hexahydro-4,7-methanindan-1-carboxaldehyd, 2-Methyloctanal, alpha-Methyl-4-(1-methylethyl)benzolacetaldehyd, 6,6-Dimethyl-2-norpinen-2-propionaldehyd, para-Methylphenoxyacetaldehyd, 2-Methyl-3-phenyl-2-propen-1-al, 3,5,5-Trimethylhexanal, Hexahydro-8,8-dimethyl-2-naphthaldehyd, 3-Propyl-bicyclo-[2.2.1]-hept-5-en-2-carbaldehyd, 9-Decenal, 3-Methyl-5-phenyl-1-pentanal, Methylnonylacetaldehyd, Hexanal und trans-2-Hexenal.

Duftstoffverbindungen vom Typ der Ketone sind beispielsweise Methyl-beta-naphthylketon, Moschusindanon (1,2,3,5,6,7-Hexahydro-1,1,2,3,3- pentamethyl-4H-inden-4-on), Tonalid (6-Acetyl-1,1,2,4,4,7-hexamethyltetralin), alpha-Damascon, beta-Damascon, delta-Damascon, iso-Damascon, Damascenon, Methyldihydrojasmonat, Menthon, Carvon, Kampfer, Koavon (3,4,5,6,6-Pentamethylhept-3-en-2-on), Fenchon, alpha-Ionon, beta- Ionon, gamma-Methyl-Ionon, Fleuramon (2-heptylcyclopen-tanon), Dihydrojasmon, cis-Jasmon, iso-E-Super (1-(1,2,3,4,5,6J,8-octahydro-2,3,8,8-tetramethyl-2-naphthalenyl)-ethan-1-on (und Isomere)), Methylcedrenylketon, Acetophenon, Methylacetophenon, para-Methoxyacetophenon, Methyl-beta-naphtylketon, Benzylaceton, Benzophenon, para-Hydroxyphenylbutanon, Sellerie- Keton(3-methyl-5-propyl-2-cyclohexenon), 6-Isopropyldecahydro-2-naphton, Dimethyloctenon, Frescomenthe (2-butan-2-yl-cyclohexan-1-on), 4-(1-Ethoxyvinyl)-3,3,5,5-tetramethylcyclohexanon, Methylheptenon, 2-(2-(4-Methyl-3-cyclohexen-1-yl)propyl)cyclopentanon, 1-(p-Menthen-6(2)yl)-1-propanon, 4-(4-Hydroxy-3-methoxyphenyl)-2-butanon, 2-Acetyl-3,3-dimethylnorbornan, 6,7- Dihydro-1,1,2,3,3-pentamethyl-4(5H)-indanon, 4-Damascol, Dulcinyl(4-(1,3-benzodioxol-5-yl) butan-2-on), Hexalon (1-(2,6,6-trimethyl-2-cyclohexene-1-yl)-1,6-heptadien-3-on), IsocyclemonE(2-acetonaphthon-1,2,3,4,5,6,7,8-octahydro-2,3,8,8-tetramethyl), Methylnonylketon, Methylcyclocitron, Methyllavendelketon, Orivon (4-tert-Amylcyclohexanon), 4-tert-Butylcyclohexanon, Delphon (2-pentyl-cyclopentanon), Muscon (CAS 541-91-3), Neobutenon (1-(5,5-dimethyl-1- cyclohexenyl)pent-4-en-1-on), Plicaton (CAS 41724-19-0), Velouton (2,2,5-Trimethyl-5- pentylcyclopentan-1-on),2,4,4,7-Tetramethyl-oct-6-en-3-on und Tetrameran (6,10- Dimethylundecen-2-on).

Duftstoffverbindungen vom Typ der Alkohole sind beispielsweise 10-Undecen-1-ol, 2,6-Dimethylheptan-2-ol, 2-Methyl-butanol, 2-Methylpentanol, 2- Phenoxyethanol, 2-Phenylpropanol, 2-tert.-Butycyclohexanol, 3,5,5-Trimethylcyclohexanol, 3-Hexanol, 3-Methyl-5-phenyl-pentanol, 3-Octanol, 3-Phenyl-propanol, 4-Heptenol, 4-Isopropyl- cyclohexanol, 4-tert.-Butycyclohexanol, 6,8-Dimethyl-2-nona-nol, 6-Nonen-1-ol, 9-Decen-1-ol, α-Methylbenzylalkohol, α-Terpineol, Amylsalicylat, Benzylalkohol, Benzylsalicylat, β-Terpineol, Butylsalicylat, Citronellol, Cyclohexylsalicylat, Decanol, Di-hydromyrcenol, Dimethylbenzylcarbinol, Dimethylheptanol, Dimethyloctanol, Ethylsalicylat, Ethylvanilin, Eugenol, Farnesol, Geraniol, Heptanol, Hexylsalicylat, Isoborneol, Isoeugenol, Isopulegol, Linalool, Menthol, Myrtenol, n-Hexanol, Nerol, Nonanol, Octanol, p-Menthan-7-ol, Phenylethylalkohol, Phenol, Phenylsalicylat, Tetrahydrogeraniol, Tetrahydrolinalool, Thymol, trans-2-cis-6-Nonadicnol, trans-2-Nonen-1-ol, trans-2-Octenol, Undecanol, Vanillin, Champiniol, Hexenol und Zimtalkohol.

Duftstoffverbindungen vom Typ der Ester sind z.B. Benzylacetat, Phenoxyethylisobutyrat, p-tert-Butylcyclohexylacetat, Linalylacetat, Dimethylbenzylcarbinylacetat (DMBCA), Phenylethylacetat, Benzylacetat, Ethylmethylphenylglycinat, Allylcyclohexylpropionat, Styrallylpropionat, Benzylsalicylat, Cyclohexylsalicylat, Floramat, Melusat und Jasmacyclat.

Zu den Ethern zählen beispielsweise Benzylethylether und Ambroxan. Zu den Kohlenwasserstoffen gehören

hauptsächlich Terpene wie Limonen und Pinen.

Bevorzugt werden Mischungen verschiedener Duftstoffe verwendet, die gemeinsam eine ansprechende Duftnote erzeugen. Ein derartiges Gemisch an Duftstoffen kann auch als Parfüm oder Parfümöl bezeichnet werden. Solche Parfümöle können auch natürliche Duftstoffgemische enthalten, wie sie aus pflanzlichen Quellen zugänglich sind.

Zu den Duftstoffen pflanzlichen Ursprungs zählen ätherische Öle wie Angelikawurzelöl, Anisöl, Arnikablütenöl, Basilikumöl, Bayöl, Champacablütenöl, Citrusöl, Edeltannenöl, Edeltannenzapfenöl, Elemiöl, Eukalyptusöl, Fenchelöl, Fichtennadelöl, Galbanumöl, Geraniumöl, Gingergrasöl, Guajakholzöl, Gurjunbalsamöl, Helichrysumöl, Ho-Öl, Ingweröl, Irisöl, jasminöl, Kajeputöl, Kalmusöl, Kamillenöl, Kampferöl, Kanagaöl, Kardamomenöl, Kassiaöl, Kiefernnadelöl, Kopaivabalsamöl, Korianderöl, Krauseminzeöl, Kümmelöl, Kuminöl, Labdanumöl, Lavendelöl, Lemongrasöl, Lindenblütenöl, Limettenöl, Mandarinenöl, Melissenöl, Minzöl, Moschuskörneröl, Muskatelleröl, Myrrhenöl, Nelkenöl, Neroliöl, Niaouliöl, Olibanumöl, Orangenblütenöl, Orangenschalenöl, Origanumöl, Palmarosaöl, Patschuliöl, Perubalsamöl, Petitgrainöl, Pfefferöl, Pfefferminzöl, Pimentöl, Pine-Öl, Rosenöl, Rosmarinöl, Salbeiöl, Sandelholzöl, Sellerieöl, Spiköl, Sternanisöl, Terpentinöl, Thujaöl, Thymianöl, Verbenaöl, Vetiveröl, Wacholderbeeröl, Wermutöl, Wintergrünöl, Ylang-Ylang-Öl, Ysop-Öl, Zimtöl, Zimtblätteröl, Zitronellöl, Zitronenöl sowie Zypressenöl sowie Ambrettolid, Ambroxan, alpha-Amylzimtaldehyd, Anethol, Anisaldehyd, Anisalkohol, Anisol, Anthranilsäuremethylester, Acetophenon, Benzylaceton, Benzaldehyd, Benzoesäureethylester, Benzophenon, Benzylalkohol, Benzylacetat, Benzylbenzoat, Benzylformiat, Benzylvalerianat, Borneol, Bornylacetat, Boisambrene forte, alpha-Bromstyrol, n-Decylaldehyd, n-Dodecylaldehyd, Eugenol, Eugenolmethylether, Eukalyptol, Farnesol, Fenchon, Fenchylacetat, Geranylacetat, Geranylformiat, Heliotropin, Heptincarbonsäuremethylester, Heptaldehyd, Hydrochinon-Dimethylether, Hydroxyzimtaldehyd, Hydroxyzimtalkohol, Indol, Iron, Isoeugenol, Isoeugenolmethylether, Isosafrol, Jasmon, Kampfer, Karvakrol, Karvon, p-Kresolmethylether, Cumarin, p-Methoxyacetophenon, Methyl-n-amylketon, Methylanthranilsäuremethylester, p-Methylacetophenon, Methylchavikol, p-Methylchinolin, Methyl-beta-naphthylketon, Methyl-n-nonylacetaldehyd, Methyl-n-nonylketon, Muskon, beta-Naphtholethylether, beta-Naphtholmethylether, Nerol, n-Nonylaldehyd, Nonylalkohol, n-Octylaldehyd, p-Oxy-Acetophenon, Pentadekanolid, beta-Phenylethylalkohol, Phenylessigsäure, Pulegon, Safrol, Salicylsäureisoamylester, Salicylsäuremethylester, Salicylsäurehexylester, Salicylsäurecyclohexylester, Santalol, Sandelice, Skatol, Terpineol, Thymen, Thymol, Troenan, gamma-Undelacton, Vanillin, Veratrumaldehyd, Zimtaldehyd, Zimtalkohol, Zimtsäure, Zimtsäureethylester, Zimtsäurebenzylester, Diphenyloxid, Limonen, Linalool, Linalylacetat und - Propionat, Melusat, Menthol, Menthon, Methyl-n-heptenon, Pinen, Phenylacetaldehyd, Terpinylacetat, Citral, Citronellal, sowie Mischungen daraus.

In einer Ausführungsform kann es bevorzugt sein, dass zumindest ein Teil des Duftstoffs als Duftstoffvorläufer oder in verkapselter Form (Duftstoffkapseln), insbesondere in Mikrokapseln, eingesetzt wird. Bei den Mikrokapseln kann es sich um wasserlösliche und/oder wasserunlösliche Mikrokapseln handeln. Es können beispielsweise Melamin-Harnstoff-Formaldehyd-Mikrokapseln, Melamin-Formaldehyd-Mikrokapseln, Harnstoff-Formaldehyd-Mikrokapseln oder Stärke-Mikrokapseln eingesetzt werden. "Duftstoffvorläufer" bezieht sich auf Verbindungen, die erst nach chemischer Umwandlung/Spaltung, typischerweise durch Einwirkung von Licht oder anderen Umgebungsbedingungen, wie pH-Wert, Temperatur, etc., den eigentlichen Duftstoff freisetzen. Derartige Verbindungen werden häufig auch als Duftspeicherstoffe oder "Pro-Fragrance" bezeichnet.

Unabhängig davon in welcher Form sie eingesetzt werden, beträgt die Menge an Duftstoff in der Zusammensetzung vorzugsweise zwischen 0,1 bis 20 Gew.-%, vorzugsweise 1 bis 15 Gew.-%, insbesondere von 3 bis 12 Gew.-%, bezogen auf das Gesamtgewicht der Zusammensetzung. Überraschend haben die Erfinder herausgefunden, dass eine Möglichkeit, um die relative Temperaturunabhängigkeit der Viskosität der erfindungsgemäßen Schmelzdispersion einzustellen, die Zugabe von bestimmten Mengen Kieselsäure unter Berücksichtigung einer gewissen Obergrenze an Fest- und Füllstoff ermöglicht.

Eine Ausführungsform betrifft daher die Bereitstellung einer wasserlöslichen oder wasserdispergierbaren Schmelzdispersionszusammensetzung, dadurch gekennzeichnet, dass die Zusammensetzung als Feststoffdispersion i) 0,1 bis 25,0 Gew.-%, vorzugsweise 0,2 bis 15 Gew.-%, noch mehr bevorzugt 0,5 bis 9 Gew.-%, am meisten bevorzugt 0,5 bis 3,0 Gew.-%, bezogen auf das Gesamtgewicht Zusammensetzung, einer Kieselsäure, vorzugsweise einer pyrogenen Kieselsäure und/oder Fällungskieselsäure, ganz bevorzugt einer pyrogenen Kieselsäure Kieselsäure und ii) 0 bis zu 29,9 Gew.-%, bezogen auf das Gesamtgewicht der Zusammensetzung, mindestens eines von unterschiedlichen Fest- oder Füllstoffs, vorzugsweise ausgewählt aus Silikaten, insbesondere Alkalisilikate, anorganischen Salzen, wie insbesondere Sulfaten, Halogeniden, Carbonaten und Phosphaten, Glycerin, sowie Fettalkoholen, Fettalkoholalkoxylaten, Fettalkoholsulfaten, Fettalkoholethersulfaten, Alkylbenzolsulfonaten und Mischungen davon, umfasst, wobei die Summe aus i) und ii) höchstens 30,0 Gew.%, bezogen auf das Gesamtgewicht der Zusammensetzung, beträgt.

In verschiedenen Ausführungsformen können die Füll- und Feststoffe die Zusammensetzung zur Einstellung gewünschter Eigenschaften der Zusammensetzung genutzt werden. Bei solchen Substanzen handelt es sich beispielsweise um Silikate, insbesondere Alkalisilikate, Salze wie Sulfate, insbesondere Alkalimetallsulfate, wie Natriumsulfat, Halogenide, Carbonate, insbesondere Alkalicarbonate, wie beispielsweise Natriumcarbonat, und Phosphate, insbesondere Alkalimetallphosphate, wie Pentanatrium- bzw. Pentakaliumtriphosphat, Glycerin, sowie Fettalkoholen, wie beispielsweise Stearylalkohol" Fettalkoholalkoxylaten, wie beispielsweise als Niotenside verwendete Fettalkoholethoxylate,

Fettalkohol- und Fettalkoholethersulfaten und Alkylbenzolsulfonaten, insbesondere solche die auch als Aniontenside Verwendung finden. Geeignete Fettalkoholethoxylate sind insbesondere die $C_{10-22}$ Fettalkoholethoxylate mit bis zu 20 EO, ganz besonders beovrzugt die $C_{12-18}$ Alkylether mit 5-8, vorzugsweise 7EO. Geeignete Fettalkoholethersulfate sind die Sulfate der vorgenannten Fettalkoholether, geeignete Fettalkoholsulfate insbesondere die $C_{10-18}$ Fettalkoholsulfate, ganz besonders die $C_{12-16}$ Fettalkoholsulfate. Als Alkylbenzolsulfonate sind insbesondere die linearen C10-13 Alkylbenzolsulfonate geeignet.

In einer weiteren Ausführungsform weist die wasserlösliche oder wasserdispergierbare Schmelzdispersionszusammensetzung die Kieselsäure, insbesondere die pyrogene Kieselsäure (A) in einer Menge von 1 bis 2,5 Gew.-%, bevorzugter 1,2 bis 2,0 Gew.-% in der Zusammensetzung enthalten ist; und/oder (B) mit einer BET-Oberfläche von mehr als 50 $m^2/g$, vorzugsweise mehr als 100 $m^2/g$, weiter bevorzugt 150 bis 250 $m^2/g$, insbesondere 175 bis 225 $m^2/g$ auf. Die eingesetzten Kieselsäuren sind vorzugsweise hochdisperse Kieselsäuren, z.B. solche mit BET-Oberflächen von mehr als 50 $m^2/g$, vorzugsweise mehr als 100 $m^2/g$, weiter bevorzugt 150 bis 250 $m^2/g$, insbesondere 175 bis 225 $m^2/g$.

Geeignete Kieselsäuren sind unter dem Handelsnamen Aerosil® und Sipernat® kommerziell von Evonik erhältlich. Besonders bevorzugt ist Aerosil® 200.

In besonders bevorzugten Ausführungsformen enthält die Zusammensetzung 1 bis 2,5 Gew.-% Kieselsäure, insbesondere eine mit einer BET-Oberfläche von 175-225 $m^2/g$, und 12 bis 17 Gew.-% eines weiteren Feststoffs, insbesondere Natriumsulfat. In solchen Zusammensetzungen wird vorzugsweise Polyethylenglykol, besonders bevorzugt mit einem Molekulargewicht von 4000-12000, weiter bevorzugt 4000-8000, insbesondere 4000-6000 g/mol, in einer Menge von 50 bis 78 Gew.-%, vorzugsweise 60 bis 75 Gew.-% eingesetzt.

Um den ästhetischen Eindruck der Zusammensetzung zu verbessern, kann sie mit geeigneten Farbstoffen eingefärbt werden. Bevorzugte Farbstoffe, deren Auswahl dem Fachmann keinerlei Schwierigkeit bereitet, sollten eine hohe Lagerstabilität und Unempfindlichkeit gegenüber den übrigen Inhaltsstoffen der Wasch- oder Reinigungsmittel und gegen Licht sowie keine ausgeprägte Substantivität gegenüber Textilfasern aufweisen, um diese nicht anzufärben. Derartige Farbstoffe sind im Stand der Technik bekannt und werden typischerweise in Konzentrationen von 0,001 bis 0,5 Gew.-%, vorzugsweise 0,01 bis 0,3 Gew.-% eingesetzt.

Um eventuell eingetragenes Wasser binden zu können, können wasserbindende Substanzen Schmelzdispersionszusammensetzung/in der festen, partikulären Zusammensetzung enthalten sein, wie beispielsweise übertrockener Zeolith und/oder wasserfreie, hydratisierbare Salze, wie beispielsweise wasserfreies Natriumsulfat. Diese Feststoffe können hierbei gleichzeitig die Funktion der oben genannten Feststoffe bzw. mit diesen identisch sein erfüllen. Dabei darf die Summe der Mengen dieser Feststoffe und der oben genannten Feststoffe 30 Gew.-% nicht übersteigen.

In verschiedenen Ausführungsformen kann die Zusammensetzung, wie hierin beschrieben, ferner mindestens eine Textil-pflegende Verbindung umfassen. Unter einer Textil-pflegenden Verbindung wird in diesem Zusammenhang jede Verbindung verstanden, die damit behandelten textilen Flächengebilden einen vorteilhaften Effekt vermittelt, wie beispielsweise einen Textil-weichmachenden Effekt, Knitterfestigkeit bzw. die schädliche oder negative Effekte, die beim Reinigen und/oder Konditionieren und/oder Tragen auftreten können, wie beispielsweise Verblassen, Vergrauung, usw., reduziert.

Die Textil-pflegende Verbindung kann vorzugsweise aus Textil-weichmachenden Verbindungen, Bleichmitteln, Bleichaktivatoren, Enzymen, Silikonölen, Antiredepositionsmittel, optischen Aufheller, Vergrauungsinhibitoren, Einlaufverhinderer, Knitterschutzmittel, Farbübertragungsinhibitoren, antimikrobiellen Wirkstoffen, Germiziden, Fungiziden, Antioxidantien, Antistatika, Bügelhilfsmitteln, Phobier- und Imprägniermitteln, Quell- und Schiebefestmitteln, UV-Absorber sowie Mischungen daraus ausgewählt werden.

Es ist insbesondere bevorzugt, dass die Textil-pflegende Verbindung eine Textil-weichmachende Verbindung ist. Dabei ist ganz besonders bevorzugt, dass die Textil-weichmachende Verbindung aus Polysiloxanen, Textil-weichmachenden Tonen, kationischen Polymeren und Mischungen daraus ausgewählt ist.

Die Verwendung von Polysiloxanen und/oder kationischen Polymeren als Textil-pflegende Verbindung in der Zusammensetzung ist vorteilhaft, da diese nicht nur einen weichmachenden Effekt zeigen, sondern auch den Parfümeindruck auf der Wäsche verstärken. Die Verwendung von weichmachenden Tonen als Textil-pflegende Verbindung in der Zusammensetzung ist vorteilhaft, da diese zusätzlich einen Wasser-enthärtenden Effekt aufweisen und so beispielsweise Kalkablagerungen auf der Wäsche verhindert werden können. Um eine optimale Leistung zu erzielen, kann es bevorzugt sein, dass die Zusammensetzung eine Kombination von wenigstens zwei Textil-pflegenden Verbindungen enthält.

Wenn die erfindungsgemäße Zusammensetzung derartige Textil-pflegende Verbindungen enthält, wird sie insbesondere als Textilpflegemittel oder Weichspüler oder als Bestandteil eines solchen Mittels oder auch als Bestandteil eines Waschmittels eingesetzt.

Ein solcher Weichspüler kann im Hauptwaschgang eines automatischen Wasch- oder Reinigungsverfahrens eingesetzt werden. Die Zusammensetzung kann beispielsweise zusammen mit dem Wasch- oder Reinigungsmittel in die Trommel oder die Einspülkammer einer Waschmaschine gegeben werden. Dies hat den Vorteil, dass kein zusätzlicher

Spülgang notwendig ist und keine unschönen Ablagerungen in der Einspülkammer auftreten

Weiterhin kann eine solche Zusammensetzung im Waschgang eines Wäschereinigungsverfahrens eingesetzt werden und so die Textil-pflegende Verbindung und das Parfüm bereits direkt zu Beginn des Waschverfahrens zur Wäsche transportieren, um so ihr volles Potential entfalten zu können. Weiterhin ist die erfindungsgemäße Zusammensetzung einfacher und besser zu handhaben als flüssige Zusammensetzungen, da keine Tropfen am Flaschenrand zurückbleiben, die bei der anschließenden Lagerung der Flasche zu Rändern auf dem Untergrund oder zu unschönen Ablagerungen im Bereich des Verschlusses führen. Dasselbe gilt fürden Fall, dass bei der Dosierung etwas von der Zusammensetzung versehentlich verschüttet wird. Die verschüttete Menge kann auch einfacher und sauberer entfernt werden.

Ein bevorzugt einsetzbares Polysiloxan weist zumindest folgende Struktureinheit auf

a) mit

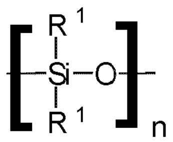

$R^1$= unabhängig voneinander $C_1$-$C_{30}$-Alkyl, vorzugsweise $C_1$-$C_4$-Alkyl, insbesondere Methyl oder Ethyl,
n = 1 bis 5000, vorzugsweise 10 bis 2500, insbesondere 100 bis 1500.

Es kann bevorzugt sein, dass das Polysiloxan zusätzlich auch folgende Struktureinheit aufweist: b)

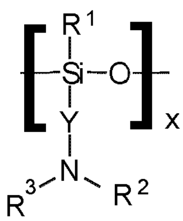

mit

$R^1$= $C_1$-$C_{30}$-Alkyl, vorzugsweise $C_1$-$C_4$-Alkyl, insbesondere Methyl oder Ethyl,
Y = ggf. substituiertes, lineares oder verzweigtes $C_1$-$C_{20}$-Alkylen, vorzugsweise -$(CH_2)$m- mit m= 1 bis 16, vorzugsweise 1 bis 8, insbesondere 2 bis 4, im speziellen 3,
$R^2$, $R^3$ = unabhängig voneinander H oder gegebenenfalls substituiertes, lineares oder verzweigtes $C_1$-$C_{30}$-Alkyl, vorzugsweise mit Aminogruppen substituiertes $C_1$-$C_{30}$-Alkyl, besonders bevorzugt -$(CH_2)_b$-$NH_2$ mit b = 1 bis 10, äußerst bevorzugt b = 2,
x = 1 bis 5000, vorzugsweise 10 bis 2500, insbesondere 100 bis 1500.

Weist das Polysiloxan nur die Struktureinheit a) mit $R^1$ = Methyl auf, handelt es sich um ein Polydimethylsiloxan. Polydimethylpolysiloxane sind als effiziente Textil-pflegende Verbindungen bekannt.

Geeignete Polydimethysiloxane umfassen DC-200 (ex Dow Corning), Baysilone® M 50, Baysilone® M 100, Baysilone® M 350, Baysilone® M 500, Baysilone® M 1000, Baysilone® M 1500, Baysilone® M 2000 oder Baysilone® M 5000 (alle ex GE Bayer Silicones).

Es kann allerdings auch bevorzugt sein, dass das Polysiloxan die Struktureinheiten a) und b) enthält. Ein besonders bevorzugtes Polysiloxan weist die folgende Struktur auf:

$$(CH_3)_3Si\text{-}[O\text{-}Si(CH_3)_2]_n\text{-}[O\text{-}Si(CH_3)\{(CH_2)_3\text{-}NH\text{-}(CH_2)_2\text{-}NH_2\}]_x\text{-}OSi(CH_3)_3$$

wobei die Summe n + x eine Zahl zwischen 2 und 10.000 ist.

Geeignete Polysiloxane mit den Struktureinheiten a) und b) sind beispielsweise kommerziell unter den Markennamen DC2-8663, DC2-8035, DC2-8203, DC05-7022 oder DC2-8566 (alle ex Dow Corning) erhältlich. Erfindungsgemäß ebenfalls geeignet sind beispielsweise die im Handel erhältlichen Produkte Dow Corning® 7224, Dow Corning® 929 Cationic Emulsion oder Formasil 410 (GE Silicones).

Ein geeigneter Textil-weichmachender Ton ist beispielsweise ein Smectit-Ton. Bevorzugte Smectit-Tone sind

Beidellit-Tone, Hectorit-Tone, Laponit-Tone, Montmorillonit-Tone, Nontronit-Tone, Saponit-Tone, Sauconit-Tone und Mischungen daraus. Montmorillonit-Tone sind die bevorzugten weichmachenden Tone. Bentonite enthalten hauptsächlich Montmorillonite und können als bevorzugte Quelle für den Textil-weichmachenden Ton dienen. Die Bentonite können als Pulver oder Kristalle eingesetzt werden.

Geeignete Bentonite werden beispielsweise unter den Bezeichnungen Laundrosil® von der Firma Süd-Chemie oder unter der Bezeichnung Detercal von der Firma Laviosa vertrieben. Es ist bevorzugt, dass die Textil-pflegende Zusammensetzung einen pulverförmigen Bentonit als Textil-pflegende Verbindung enthält.

Geeignete kationische Polymere umfassen insbesondere solche, die in "CTFA International Cosmetic Ingredient Dictionary", Fourth Edition, J. M. Nikitakis, et al, Editors, veröffentlicht durch die Cosmetic, Toiletry, and Fragrance Association, 1991 beschrieben sind und unter der Sammelbezeichnung "Polyquaternium" zusammengefasst sind. Im Folgenden sind einige geeignete Polyquaternium-Verbindungen genauer aufgeführt.

POLYQUATERNIUM-1 (CAS-Nummer: 68518-54-7) Definition: $\{(HOCH_2CH_2)_3N^+\text{-}CH_2CH{=}CHCH_2\text{-}[N^+(CH_3)_2\text{-}CH_2CH{=}CHCH_2]_x\text{-}N^+(CH_2CH_2OH)_3\}[Cl^-]_{x+2}$

POLYQUATERNIUM-2 (CAS-Nummer: 63451-27-4) Definition: $[\text{-}N(CH_3)_2\text{-}CH_2CH_2CH_2\text{-}NH\text{-}C(O)\text{-}NH\text{-}CH_2CH_2CH_2\text{-}N(CH_3)_2\text{-}CH_2CH_2OCH_2CH_2\text{-}]^{2+}\ (Cl^-)_2$

POLYQUATERNIUM-3 Definition: Copolymer von Acrylamid und Trimethylammoniumethylmethacrylatmethosulfat

POLYQUATERNIUM-4 (CAS-Nummer: 92183-41-0) Definition: Copolymer von Hydroxyethylcellulose und Diallyldimethylammoniumchlorid Beispielsweise erhältlich als Celquat® H 100 oder Celquat® L200 (ex National Starch)

POLYQUATERNIUM-5 (CAS-Nummer: 26006-22-4) Definition: Copolymer von Acrylamid und β-Methacrylyloxyethyltrimethylammoniummethosulfat.

POLYQUATERNIUM-6 (CAS-Nummer: 26062-79-3)
Definition: Polymer von Dimethyldiallylammoniumchlorid

POLYQUATERNIUM-7 (CAS-Nummer: 26590-05-6)
Definition: Polymeres quaternäres Ammoniumsalz bestehend aus Acrylamid- und Dimethyldiallylammoniumchlorid-Monomeren.

POLYQUATERNIUM-8
Definition: Polymeres quaternäres Ammoniumsalz von Methyl- und Stearyldimethylaminoethylmethacrylat, welches mit Dimethylsulfat quaternierte wurde

POLYQUATERNIUM-9
Definition: Polymeres quaternäres Ammoniumsalz von Polydimethylaminoethylmethacrylat, welches mit Methylbromid quaternierte wurde

POLYQUATERNIUM-11 (CAS-Nummer: 53633-54-8)
Definition: Quaternäres Ammoniumpolymer, welches durch Umsetzung von Diethylsulfat mit dem Copolymer von Vinylpyrrolidon und Dimethylaminoethylmethacrylat gebildet wird.

POLYQUATERNIUM-12 (CAS-Nummer: 68877-50-9)
Definition: Quaternäres Ammoniumpolymersalz, welches durch Umsetzung des Ethylmethacrylat/- Abietylmethacrylat/Diethylaminoethylmethacrylat-Copolymers mit Dimethylsulfat erhältlich ist

POLYQUATERNIUM-13 (CAS Nummer: 68877-47-4)
Definition: Polymeres quaternäres Ammoniumsalz, welches durch Umsetzung des Ethylmethacrylat/Oleylmethacrylat/Diethylaminoethylmethacrylat-Copolymers mit Dimethylsulfat erhältlich ist

POLYQUATERNIUM-14 (CAS-Nummer: 27103-90-8)
Definition: Polymeres quaternäres Ammoniumsalz der Formel $\text{-}\{\text{-}CH_2\text{-}C\text{-}(CH_3)\text{-}[C(O)O\text{-}CH_2CH_2\text{-}N(CH_3)_3\text{-}]\}_x^+\ [CH_3SO_4]^-_x$

POLYQUATERNIUM-15 (CAS-Nummer: 35429-19-7)

Definition: Copolymer von Acrylamid und β-Methacrylyloxyethyltrimethylammoniumchlorid

POLYQUATERNIUM-16 (CAS-Nummer: 95144-24-4)
Definition: Polymeres quaternäres Ammoniumsalz, gebildet aus Methylvinylimidazoliumchlorid und Vinylpyrrolidon

POLYQUATERNIUM-17 (CAS-Nummer: 90624-75-2)
Definition: Polymeres quaternäres Ammoniumsalz, welches durch Umsetzung von Adipinsäure und Dimethylaminopropylamin mit Dichlorethylether erhältlich ist.

POLYQUATERNIUM-18
Definition: Polymeres quaternäres Ammoniumsalz, welches durch Umsetzung von Azelainsäure und Dimethylaminopropylamin mit Dichlorethylether erhältlich ist.

POLYQUATERNIUM-19
Definition: Polymeres quaternäres Ammoniumsalz, welches durch Umsetzung von Polyvinylalkohol mit 2,3-Epoxypropylamin erhältlich ist.

POLYQUATERNIUM-20
Definition: Polymeres quaternäres Ammoniumsalz, welches durch Umsetzung von Polyvinyloctadecylether mit 2,3-Epoxypropylamin erhältlich ist.

POLYQUATERNIUM-21 (CAS-Nummer: 102523-94-4)
Definition: Polysiloxan/Polydimethyldialkylammoniumacetat-Copolymer

POLYQUATERNIUM-22 (CAS-Nummer: 53694-17-0)
Definition: Dimethyldiallylammoniumchlorid/Acrylsäure-Copolymer

POLYQUATERNIUM-24 (CAS-Nummer: 107987-23-5)
Definition: Polymeres quaternäres Ammoniumsalz aus der Umsetzung von Hydroxyethylcellulose mit einem mit Lauryldimethylammonium substituierten-Epoxid

POLYQUATERNIUM-27
Definition: Blockcopolymer aus der Umsetzung von Polyquaternium-2 mit Polyquaternium-17.

POLYQUATERNIUM-28 (CAS-Nummer: 131954-48-8)
Definition: Vinylpyrrolidon/Methacrylamidopropyltrimethylammoniumchlorid-Copolymer

POLYQUATERNIUM-29
Definition: Chitosan, welches mit Propylenoxid umgesetzt und mit Epichlorhydrin quaternisiert wurde

POLYQUATERNIUM-30
Definition: Polymeres quaternäres Ammoniumsalz der Formel: $-[CH_2C(CH_3)(C(O)OCH_3)]_x-[CH_2C(CH_3)(C(O)OCH_2CH_2N^+(CH_3)_2CH_2COO^-)]_y-$

POLYQUATERNIUM-31 (CAS-Nummer. 136505-02-7)

POLYQUATERNIUM-32 (CAS-Nummer: 35429-19-7)
Definition: Polymer von N,N,N-Trimethyl-2-[(2-methyl-1-oxo-2-propenyl)oxy]-ethanaminiumchlorid mit 2-Propenamid

POLYQUATERNIUM-37 (CAS-Nummer: 26161-33-1)
Definition: Homopolymer von Methacryloyltrimethylchlorid Beispielsweise erhältlich als Synthalen® CR (ex 3V Sigma)

POLYQUATERNIUM-44 (CAS-Nummer: 150595-70-5)
Definition: Quaternäres Ammoniumsalz des Copolymers von Vinylpyrrolidon und quaternisiertem Imidazolin

POLYQUATERNIUM-68 (CAS-Nummer: 827346-45-2)

Definition: Quaternisiertes Copolymer von Vinylpyrrolidon, Methacrylamid, Vinylimidazol und quaternisiertem Vinylimidazol

Es kann bevorzugt sein, dass die Zusammensetzung eine Textil-weichmachende Verbindung und eine oder mehr weitere Textil-pflegende Verbindung(en) enthält.

Die Menge an Textil-pflegender Verbindung in der Zusammensetzung kann, in verschiedenen Ausführungsformen, 0,1 bis 15 Gew.-% und bevorzugt 2 bis 12 Gew.-% betragen. In besonders bevorzugten Ausführungsformen enthält die Zusammensetzung Bentonit in einer Menge bis 5 Gew.-%, vorzugsweise 0,5 bis 2 Gew.-%.

Die Zusammensetzung kann optional weitere Inhaltsstoffe enthalten. Um die anwendungstechnischen und/oder ästhetischen Eigenschaften unabhängig von ihrem Einsatzzweck zu verbessern, werden diese zusätzliche Inhaltsstoffe vorzugsweise ausgewählt aus der Gruppe bestehend aus Perlglanzmitteln, hautpflegenden Verbindungen, Bitterstoffen und Mischungen daraus.

Beispiele für geeignete Perlglanzmittel sind Ethylenglykolmono- und -distearat sowie PEG-3-distearat.

Unter einer hautpflegenden Verbindung wird eine Verbindung oder eine Mischung aus Verbindungen verstanden, die bei Kontakt eines Textils mit dem Waschmittel auf das Textil aufziehen und bei Kontakt des Textils mit Haut der Haut einen Vorteil verleihen verglichen mit einem Textil, welche nicht mit der erfindungsgemäßen Zusammensetzung behandelt wurde. Dieser Vorteil kann beispielsweise den Transfer der hautpflegenden Verbindung vom Textil auf die Haut, einen geringeren Wassertransfer von der Haut auf das Textil oder eine geringere Reibung auf der Hautoberfläche durch das Textil umfassen.

Die hautpflegende Verbindung ist vorzugsweise hydrophob, kann flüssig oder fest sein und muss kompatibel mit den anderen Inhaltsstoffen der festen, Textil-pflegenden Zusammensetzung sein. Die hautpflegende Verbindung kann beispielsweise

a) Wachse wie Carnauba, Spermaceti, Bienenwachs, Lanolin, Derivate davon sowie Mischungen daraus;
b) Pflanzenextrakte, zum Beispiel pflanzliche Öle wie Avokadoöl, Olivenöl, Palmöl, Palmenkernöl, Rapsöl, Leinöl, Sojaöl, Erdnussöl, Korianderöl, Ricinusöl, Mohnöl, Kakaoöl, Kokosnussöl, Kürbiskernöl, Weizenkeimöl, Sesamöl, Sonnenblumenöl, Mandelöl, Macadamianussöl, Aprikosenkernöl, Haselnussöl, Jojobaöl oder Canolaöl, Kamille, Aloe Vera sowie Mischungen daraus;
c) höhere Fettsäuren wie Laurinsäure, Myristinsäure, Palmitinsäure, Stearinsäure, Behensäure, Ölsäure, Linolsäure, Linolensäure, Isostearinsäure oder mehrfach ungesättigte Fettsäuren;
d) höhere Fettalkohole wie Laurylalkohol, Cetylalkohol, Stearylalkohol, Oleylalkohol, Behenylalkohol oder 2-Hexadecanol,
e) Ester wie Cetyloctanoat, Lauryllactat, Myristyllactat, Cetyllactat, Isopropylmyristat, Myristylmyristat, Isopropylpalmitat, Isopropyladipat, Butylstearat, Decyloleat, Cholesterolisostearat, Glycerolmonostearat, Glyceroldistearat, Glyceroltristearat, Alkyllactat, Alkylcitrat oder Alkyltartrat;
f) Kohlenwasserstoffe wie Paraffine, Mineralöle, Squalan oder Squalen;
g) Lipide;
h) Vitamine wie Vitamin A, C oder E oder Vitaminalkylester;
i) Phospholipide;
j) Sonnenschutzmittel wie Octylmethoxylcinnamat und Butylmethoxybenzoylmethan;
k) Silikonöle wie lineare oder cyclische Polydimethylsiloxane, Amino-, Alkyl-, Alkylaryl- oder Arylsubstituierte Silikonöle und
l) Mischungen daraus umfassen.

Die Menge an hautpflegender Verbindung beträgt vorzugsweise zwischen 0,01 und 10 Gew.-%, vorzugsweise zwischen 0,1 und 5 Gew.-% und ganz besonders bevorzugt zwischen 0,3 und 3 Gew.-% bezogen auf das Gesamtgewicht der Zusammensetzung. Es kann sein, dass die Hautpflegende Verbindung zusätzlich auch einen Textil-pflegenden Effekt besitzt.

Um eine orale Aufnahme der Zusammensetzung durch Menschen, insbesondere Kinder, oder Tiere zu verhindern, kann diese einen Bitterstoff wie Bitrex® enthalten.

Die vorliegende Erfindung betrifft ein Verfahren zur Herstellung einer festen, partikulären Zusammensetzung, dadurch gekennzeichnet, dass eine Schmelzdispersionszusammensetzung erstarrt wird. Die Erstarrung erfolgt mittels eines Pastillierungs- oder Vertropfungsverfahrens.

Ein Verfahren zur Herstellung derartiger feste, partikuläre Zusammensetzungen kann die folgenden Schritte umfassen:

(a) kontinuierliches Erzeugen und Fördern einer Schmelze umfassend das mindestens eine wasserlösliche oder wasserdispergierbare Trägerpolymer, die Kieselsäure und optional den mindestens einen Feststoff und/oder Textil-pflegende Verbindungen, insbesondere Bentonit;

(b) kontinuierliches Zudosieren des mindestens einen Duftstoffs und eines Farbstoffs zu der Schmelze;

(c) Mischen der Schmelze und des mindestens einen Duftstoffs; und

(d) Abkühlen und optional Umformen der Mischung um parfümhaltige Schmelzkörper zu erhalten.

Ein weiterer Aspekt der vorliegenden Erfindung betrifft eine feste, partikuläre Zusammensetzung, dadurch gekennzeichnet, dass sie gemäß einem erfindungsgemäßen Verfahren hergestellt worden ist.

Die so hergestellten festen, partikulären Zusammensetzungen, auch Schmelzkörper genannt, können jede beliebige Form haben.

Die Formgebung erfolgt dabei insbesondere in Schritt (d) des beschriebenen Verfahrens. Bevorzugt sind feste, partikuläre Formen, wie beispielsweise um im Wesentlichen sphärische, figürliche, schuppen-, quader-, zylinder-, kegel-, kugelkalotten- bzw linsen-, hemisphären-, scheibchen- oder nadelförmige Partikel. Beispielsweise können die Partikel eine Gummibärchenartige, figürliche Ausgestaltung haben.

Dabei beträgt die maximale Ausdehnung der Partikel in einer räumlichen Dimension vorzugsweise von 0,5 bis 10 mm, insbesondere 0,8 bis 7 mm und besonders bevorzugt 1 bis 3 mm. Das bedeutet, dass, beispielsweise im Falle von sphärischen Partikeln, der Durchmesser der Partikel von 0,5 bis 10 mm, insbesondere 0,8 bis 7 mm und besonders bevorzugt 1 bis 3 mm beträgt. Üblicherweise liegt das Gewicht der einzelnen Partikel zwischen 2 bis 150 mg, vorzugsweise zwischen 5 bis 10 mg.

In verschiedenen Ausführungsformen erfolgt das Erzeugen einer Schmelze, das Schmelzen, in Schritt (a) der hierin beschriebenen Verfahren durch Erwärmen auf eine Temperatur, die nicht mehr als 20 °C über dem Erstarrungspunkt des Trägerpolymers liegt.

Das Schmelzen kann mit allen üblichen und dem Fachmann bekannten Verfahren und Vorrichtungen erfolgen. Die Schmelze, die das mindestens eine Trägerpolymer enthält, wird beispielsweise kontinuierlich erzeugt, indem das mindestens eine Trägerpolymer und ggf. weitere Bestandteile des Schmelzkörpers, wie beispielsweise der mindestens eine Feststoff und die Kieselsäure sowie optional auch die Textil-pflegenden Verbindungen, wie Bentonit, kontinuierlich einer entsprechenden Vorrichtung zugeführt werden, in welcher sie erwärmt und die so erzeugte Schmelze weitergefördert, beispielsweise gepumpt wird. Die Schmelze kann aber auch separat, beispielsweise in einem Batch-Verfahren, hergestellt werden. Erfindungsgemäß sind auch solche Ausführungsformen umfasst, bei denen die Bestandteile der Schmelze zu einem beliebigen Zeitpunkt vor Durchführung des erfindungsgemäßen Verfahrens miteinander vermischt werden und die Mischung bis zur Durchführung des Verfahrens in geschmolzener oder in abgekühlter fester Form gelagert wird. Die so erzeugte Schmelze kann als Masterbatch eingesetzt werden, welchem in dem folgenden Schritt dann je nach Bedarf unterschiedliche Duftstoffe und ggf. auch weitere Inhaltsstoffe, wie Farbstoffe, zudosiert werden.

In einem nächsten Schritt wird dann der mindestens eine Duftstoff kontinuierlich zu der Schmelze zudosiert. Dazu wird der mindestens eine Duftstoff vorzugsweise in flüssiger Form eingesetzt, beispielsweise als Parfümöl, Lösung in einem geeigneten Lösungsmittel oder als Aufschlämmung von Parfümkapseln in einem, typischerweise wasserhaltigen, Lösungsmittel. "Flüssig" wie in diesem Zusammenhang verwendet, bedeutet unter den Einsatzbedingungen flüssig, vorzugsweise bei 20°C flüssig. Zusätzlich zu dem Duftstoff kann in diesem Schritt auch ein Farbstoff dosiert werden. Der Farbstoff kann beispielsweise für die Art des Duftstoffs indikativ sein, d.h. für einen bestimmten Duftstoff/Duftstoffmischung wird ein spezieller Farbstoff bzw. Farbstoffmischung eingesetzt, um die erhaltenen Pastillen direkt visuell unterscheidbar zu machen.

Bei der Herstellung kann der Durchfluss optional mittels Durchflussmengenmessung der einzelnen Dosierströme, d.h. der Schmelze, des Duftstoffstroms und ggf. weitere Inhaltsstoffströme gesteuert werden. Hierüber lassen sich beispielsweise auch die Mengenverhältnisse der einzelnen Bestandteile einstellen. Die Inhaltstoffe neben dem Trägerpolymer(en) und den Duftstoffen können entweder direkt mit dem Trägerpolyer zusammen als Schmelze erzeugt werden, mit den Duftstoffen zusammen oder separat zu der Schmelze zudosiert werden. Bei letzterer Alternative kann die Zudosierung vor oder nach Zudosierung der Duftstoffe erfolgen.

In einigen Ausführungsformen ist das erfindungsgemäße Verfahren dadurch gekennzeichnet, dass der mindestens eine Feststoff und/oder die Kieselsäure und/oder die mindestens eine Textil-pflegende Verbindung und/oder die zusätzlichen Inhaltsstoffe (A) zu der in Schritt (a) erzeugten und geförderten Schmelze zudosiert werden und/oder (B) bereits in der in Schritt (a) erzeugten und geförderten Schmelze enthalten sind.

Das Mischen der vereinigten Dosierströme kann dann jeweils direkt nach dem Zudosieren oder stromabwärts nach Zudosierung mehrerer oder aller Inhaltsstoffe mit geeigneten Mischern, wie üblichen statischen oder dynamischen Mischaggregaten erfolgen.

Nach dem Mischen wird die Schmelze, die die Duft- und Feststoffe und ggf. weitere Inhaltsstoffe sowie das Trägerpolymer enthält abgekühlt und optional der Umformung zugeführt, wo die Schmelze erstarrt und ihre endgültige Form erhält. Geeignete Verfahren zur Formgebung sind dem Fachmann bekannt. Übliche Formen wurden bereits oben beschrieben.

In einem weiteren Aspekt betrifft die vorliegende Erfindung die Verwendung der erfindungsgemäßen festen,

partikulären Zusammensetzung als Textilpflegemittel, vorzugsweise Beduftungsmittel und/oder Weichspüler, zum Beduften und/oder Konditionieren von textilen Flächengebilden.

Die Erfindung betrifft also auch die mittels der hierin beschriebenen Verfahren erhältlichen Schmelzkörper sowie deren Verwendung als Textilpflegemittel, vorzugsweise Beduftungsmittel und/oder Weichspüler, zum Beduften und/oder Konditionieren von textilen Flächengebilden. Die Schmelzkörper können dabei ein Textilbehandlungsmittel, wie beispielsweise ein Weichspüler oder ein Teil eines solchen Mittels sein.

Ferner betrifft die Erfindung ein Wasch- oder Reinigungsmittel, umfassend die erfindungsgemäß hergestellten Schmelzkörper, beziehungsweise die erfindungsgemäßen feste, partikuläre Zusammensetzung.

Durch das Einbringen der erfindungsgemäß hergestellten parfümhaltigen Schmelzkörper in ein Wasch- oder Reinigungsmittel steht dem Verbraucher ein Textil-pflegendes Wasch- oder Reinigungsmittel ("2in1"-Wasch- oder Reinigungsmittel) zur Verfügung und er braucht nicht zwei Mittel zu dosieren sowie keinen separaten Spülgang. Da die erfindungsgemäß hergestellten Zusammensetzungen parfümiert sind, muss nicht auch das Wasch- oder Reinigungsmittel parfümiert werden. Dies führt nicht nur zu geringeren Kosten, sondern ist auch für Verbraucher mit empfindlicher Haut und/oder Allergien vorteilhaft.

Die hierin beschriebenen Schmelzkörper-Zusammensetzungen eignen sich insbesondere zum Konditionieren von textilen Flächengebilden und werden dazu zusammen mit einem herkömmlichen Wasch- oder Reinigungsmittel im (Haupt)Waschgang eines herkömmlichen Wasch- und Reinigungsprozesses mit den textilen Flächengebilden in Kontakt gebracht.

Ist die erfindungsgemäße Schmelzkörper-Zusammensetzung Teil eines Wasch- oder Reinigungsmittels, kann ein festes Wasch- oder Reinigungsmittel vorzugsweise mit 1 bis 20 Gew.-%, insbesondere mit 5 bis 15 Gew.-%, der erfindungsgemäßen Zusammensetzung gemischt werden.

Die im Zusammenhang mit den erfindungsgemäßen Verfahren beschriebenen bevorzugten Ausführungsformen sind ebenfalls auf die Schmelzkörper als solche, die diese enthaltenden Wasch- und Reinigungsmittel sowie die hierin beschriebenen Verwendungen übertragbar und umgekehrt.

<u>Beispiele</u>

**Beispiel 1**

Die folgende Tabelle enthält Beispiele für erfindungsgemäße Rezepturen (alle Angaben in Gew.-%)

| **Beispiel Nr.:** | **Masterbatch** | **E1** | **E2** | **E3** |
|---|---|---|---|---|
| **PEG 6000** | 79,82 | 73,31 | 71,53 | 72,00 |
| **Natriumsulfat** | 17,18 | 15,78 | 15,40 | 15,50 |
| **Hydrophile pyrogene Kieselsäure (Aerosil 200)** | 1,89 | 1,73 | 1,69 | 1,70 |
| **Bentonit** | 1,11 | 1,02 | 1,00 | 1,00 |
| **Parfüm** | | 2,50 (Parfüm 1) | 4,80 (Parfüm 2) | 4,20 (Parfüm 3) |
| **Parfümkapselslurry** | | 5,50 | 5,50 | 5,50 |
| **Farbstoff** | | 0,16 (lila) | 0,09 (pink) | 0,10 (blau) |

Von den drei erfindungsgemäßen Zusammensetzungen E1, E2 und E3 wurde die Viskosität sowie die Änderung der Viskosität in Abhängigkeit der Temperatur bestimmt.

Die Messung erfolgte in einem Texas Instruments AR-G2 Rheometer (Platte/Platte, 4 cm Durchmesser, 1100 $\mu$m Spalt; Temperatur von 90 auf 40 °C fallend, Kühlrate 2,5°C/Minute; Scherrate 10/s)

Die Ergebnisse für E3 sind in Figur 3 dargestellt und zeigen, dass die Viskosität im Wesentlichen im Rahmen der erfindungsgemäßen Grenzen temperaturunabhängig ist. Konkret stellt Figur 1 den Zusammenhang zwischen Temperatur der Schmelze, Aerosil 200 Menge (ad 100% des Feststoffgehalts wird Sulfat verwendet = obere auf der x-Achse) und daraus resultierender Viskosität dar. Dargestellt sind Linien konstanter Viskosität. Die Viskosität in Pas ist auf den Linien vermerkt. Beispielsweise ist ersichtlich, das die Viskosität für 2% Aerosil im Temperaturbereich von 50 - 70°C weitgehend konstant ca. 9 Pa*s beträgt. Die entsprechenden Messungen wurden für E1 und E2 durchgeführt. Die Ergebnisse für E1 sind in Figur 1, die Ergebnisse für E2 in Figur 2 dargestellt.

Im Gegensatz dazu sinkt die Viskosität von reinem PEG 6000 im Temperaturbereich von 60 bis 90°C von etwa

1,1 auf 0,5 Pa*s und im Bereich von 60 bis 70°C von 1,1 auf 0,85 Pa*s (Daten nicht gezeigt). Damit ergibt sich für reines PEG ein v von ca. 2,7 %/°C.

## Patentansprüche

1. Verfahren zur Herstellung einer festen, partikulären Zusammensetzung, **dadurch gekennzeichnet, dass** eine wasserlösliche oder wasserdispergierbare Schmelzdispersionszusammensetzung, umfassend

   (a) 50 bis 78 Gew.-%, bezogen auf das Gesamtgewicht der Zusammensetzung, mindestens eines wasserlöslichen oder wasserdispergierbaren Trägerpolymers mit einem Schmelzpunkt >30°C bis 250°C, vorzugsweise >40°C bis 150°C, ausgewählt aus Polyethylenglykol, und
   (b) i) 0,1 bis 25,0 Gew.-%, bezogen auf das Gesamtgewicht Zusammensetzung, einer Kieselsäure und ii) 0 bis zu 29,9 Gew.-%, bezogen auf das Gesamtgewicht der Zusammensetzung, mindestens eines von unterschiedlichen Fest- oder Füllstoffs, umfasst, wobei die Summe aus i) und ii) höchstens 30,0 Gew.%, bezogen auf das Gesamtgewicht der Zusammensetzung, beträgt, wobei
   (c) 0,1 Gew.-% bis zu 20 Gew.-% mindestens eines Duftstoffs, in der Schmelze enthalten ist; wobei der mindestens eine Duftstoff in Form von Duftstoffkapseln und/oder Parfümölen eingesetzt wird; und
   (d) die Zusammensetzung ferner mindestens einen Farbstoff in einer Konzentration von 0,001 bis 0,5 Gew.-% enthält, bezogen auf das Gesamtgewicht der Zusammensetzung; und
   (e) die Zusammensetzung im Temperaturbereich bis 20°C oberhalb des Erstarrungspunktes eine relative Temperaturabhängigkeit der Viskosität v im Bereich von -2,0 %/°C bis +2,0 %/°C, vorzugsweise von -1,5 %/°C bis +1,5 %/°C, noch mehr bevorzugt von -1,0 %/°C bis +1,0 %/°C aufweist, erstarrt wird, wobei vorzugsweise die Erstarrung mittels Pastillierung oder Vertropfung erfolgt.

2. Verfahren gemäß Anspruch 1, **dadurch gekennzeichnet, dass** die Zusammensetzung als Feststoffdispersion i) 0,2 bis 15 Gew.-%, noch mehr bevorzugt 0,5 bis 9 Gew.-%, am meisten bevorzugt 0,5 bis 3,0 Gew.-%, bezogen auf das Gesamtgewicht Zusammensetzung, einer Kieselsäure, vorzugsweise einer pyrogenen Kieselsäure und/oder Fällungskieselsäure, ganz bevorzugt einer pyrogenen Kieselsäure Kieselsäure und ii) 0 bis zu 29,9 Gew.-%, bezogen auf das Gesamtgewicht der Zusammensetzung, mindestens eines von unterschiedlichen Fest- oder Füllstoffs, vorzugsweise ausgewählt aus Silikaten, insbesondere Alkalisilikate, anorganischen Salzen, wie insbesondere Sulfaten, Halogeniden, Carbonaten und Phosphaten, Glycerin, sowie Fettalkoholen, Fettalkoholalkoxylaten, Fettalkoholsulfaten, Fettalkoholethersulfaten, Alkylbenzolsulfonaten und Mischungen davon, umfasst, wobei die Summe aus i) und ii) höchstens 30,0 Gew.%, bezogen auf das Gesamtgewicht der Zusammensetzung, beträgt.

3. Verfahren nach einem der voranstehenden Ansprüche, **dadurch gekennzeichnet, dass** in der Zusammensetzung 1 bis 15 Gew.-%, noch bevorzugter 3 bis 12 Gew.-% mindestens eines Duftstoffs in der Schmelze enthalten ist; wobei der mindestens eine Duftstoff in Form von Duftstoffkapseln und/oder Parfümölen eingesetzt wird.

4. Verfahren nach einem der voranstehenden Ansprüche, **dadurch gekennzeichnet, dass** die Kieselsäure, insbesondere die pyrogene Kieselsäure

   (A) in einer Menge von 1 bis 2,5 Gew.-%, bevorzugter 1,2 bis 2,0 Gew.-% in der Zusammensetzung enthalten ist; und/oder
   (B) eine BET-Oberfläche von mehr als 50 $m^2/g$, vorzugsweise mehr als 100 $m^2/g$, weiter bevorzugt 150 bis 250 $m^2/g$, insbesondere 175 bis 225 $m^2/g$ aufweist.

5. Verfahren nach einem der voranstehenden Ansprüche, **dadurch gekennzeichnet, dass** die Zusammensetzung einen Farbstoff in einer Konzentration von 0,01 bis 0,3 Gew.-%, bezogen auf das Gesamtgewicht der Zusammensetzung, enthält.

6. Verfahren nach einem der voranstehenden Ansprüche, **dadurch gekennzeichnet, dass** das wasserlösliche Trägerpolymer

   (A) einen Erstarrungspunkt von 48°C bis 120°C, vorzugsweise von 48°C bis 80°C aufweist; und/oder
   (B) ein mittleres Molekulargewicht (Mn) von >1000 g/mol, insbesondere >1500 g/mol, vorzugsweise zwischen 3.000 und 15.000, noch bevorzugter zwischen 4.000 und 13.000, weiter bevorzugt zwischen 4000 und 6000, 6000 und 8000 oder 9.000 und 12.000 und insbesondere bevorzugt von etwa 4000 oder etwa 6000 g/mol

aufweist; und/oder
(C) in einer Menge von 60 bis 78 Gew.-%, beispielsweise 65 bis 75 Gew.-%, basierend auf dem Gesamtgewicht der Zusammensetzung, in dieser enthalten ist.

7. Verfahren nach einem der voranstehenden Ansprüche, **dadurch gekennzeichnet, dass** die Zusammensetzung ferner mindestens eine Textil-pflegende Verbindung enthält, wobei diese vorzugsweise ausgewählt wird aus Textil-weichmachenden Verbindungen, Silikonölen, Antiredepositionsmitteln, optischen Aufhellern, Vergrauungsinhibitoren, Einlaufverhinderern, Knitterschutzmitteln, Farbübertragungsinhibitoren, antimikrobiellen Wirkstoffen, Germiziden, Fungiziden, Antioxidantien, Antistatika, Bügelhilfsmitteln, Phobier- und Imprägniermitteln, Quell- und Schiebefestmitteln, UV-Absorber sowie Mischungen daraus.

8. Verfahren nach Anspruch 7, **dadurch gekennzeichnet, dass** die Textil-pflegende Verbindung eine Textil-weichmachende Verbindung ist, vorzugsweise ausgewählt aus Polysiloxanen, Textil-weichmachenden Tonen, kationischen Polymeren und Mischungen daraus, insbesondere Bentonit.

9. Eine feste, partikuläre Zusammensetzung, **dadurch gekennzeichnet, dass** sie gemäß einem Verfahren gemäß Anspruch 1 hergestellt worden ist.

10. Feste, partikuläre Zusammensetzung gemäß Anspruch 9, **dadurch gekennzeichnet, dass** es sich um sphärische, figürliche, schuppen-, quader-, zylinder-, kegel-, kugelkalotten- bzw linsen-, hemisphären-, scheibchen- oder nadelförmige Partikel handelt.

11. Verwendung der festen, partikulären Zusammensetzung gemäß einem der Ansprüche 9 oder 10 als Textilpflegemittel, vorzugsweise Beduftungsmittel und/oder Weichspüler, zum Beduften und/oder Konditionieren von textilen Flächengebilden.

12. Wasch- oder Reinigungsmittel, umfassend eine feste, partikuläre Zusammensetzung gemäß einem der Ansprüche 9 oder 10.

## Claims

1. A method for preparing a solid, particulate composition, **characterized in that** a water-soluble or water-dispersible melt-dispersion composition comprising

(a) 50 to 78 wt.%, based on the total weight of the composition, of at least one water-soluble or water-dispersible carrier polymer having a melting point of >30°C to 250°C, preferably >40°C to 150°C, selected from polyethylene glycol, and
(b) i) 0.1 to 25.0 wt.%, based on the total weight of the composition, of a silicic acid and ii) 0 to 29.9 wt.%, based on the total weight of the composition, of at least one of different solids or fillers, the sum of i) and ii) being at most 30.0 wt.%, based on the total weight of the composition,
(c) 0.1 wt.% to 20 wt.% of at least one fragrance being contained in the melt; the at least one fragrance being used in the form of fragrance capsules and/or perfume oils; and
(d) the composition further containing at least one dye in a concentration of from 0.001 to 0.5 wt.%, based on the total weight of the composition; and
(e) the composition in the temperature range up to 20°C above the setting point having a relative temperature dependence of the viscosity v in the range of from - 2.0%/°C to +2.0%/°C, preferably from -1.5%/°C to + 1.5%/°C, even more preferably from -1.0%/°C to +1.0%/°C,

is set, the setting preferably taking place by means of pastillation or dripping.

2. The method according to claim 1, **characterized in that** the composition as a solid dispersion comprises i) 0.2 to 15 wt.%, more preferably 0.5 to 9 wt.%, most preferably 0.5 to 3.0 wt.%, based on the total weight of the composition, of a silicic acid, preferably of a pyrogenic silicic acid and/or precipitated silicic acid, very preferably of a pyrogenic silicic acid and ii) 0 to 29.9 wt.%, based on the total weight of the composition, of at least one of various solids or fillers, preferably selected from silicates, in particular alkali silicates, inorganic salts, such as in particular sulfates, halides, carbonates and phosphates, glycerol, and fatty alcohols, fatty alcohol alkoxylates, fatty alcohol sulfates, fatty alcohol ether sulfates, alkyl benzene sulfonates and mixtures thereof, the sum of i) and ii) being at most 30.0

wt.% based on the total weight of the composition.

3. The method according to either of the preceding claims, **characterized in that** the composition contains 1 to 15 wt.%, more preferably 3 to 12 wt.%, of at least one fragrance in the melt; the at least one fragrance being used in the form of fragrance capsules and/or perfume oils.

4. The method according to one of the preceding claims, **characterized in that** the silicic acid, in particular the pyrogenic silicic acid

(A) is contained in the composition in an amount of from 1 to 2.5 wt.%, more preferably 1.2 to 2.0 wt.%; and/or
(B) has a BET surface area of more than 50 $m^2/g$, preferably more than 100 $m^2/g$, more preferably 150 to 250 $m^2/g$, in particular 175 to 225 $m^2/g$.

5. The method according to one of the preceding claims, **characterized in that** the composition contains a dye at a concentration of between 0.01 to 0.3 wt.%, based on the total weight of the composition.

6. The method according to one of the preceding claims, **characterized in that** the water-soluble carrier polymer

(A) has a setting point of from 48°C to 120°C, preferably from 48°C to 80°C; and/or
(B) has an average molecular weight (Mn) of >1000 g/mol, in particular >1500 g/mol, preferably between 3,000 and 15,000, more preferably between 4,000 and 13,000, even more preferably between 4,000 and 6,000, 6,000 and 8,000 or 9,000 and 12,000 and particularly preferably from approximately 4,000 or approximately 6,000 g/mol; and/or
(C) is contained in an amount of from 60 to 78 wt.%, for example 65 to 75 wt.%, based on the total weight of the composition, in this composition.

7. The method according to one of the preceding claims, **characterized in that** the composition further contains at least one textile care compound, said compound preferably being selected from textile-softening compounds, silicone oils, antiredeposition agents, optical brighteners, graying inhibitors, anti-shrink agents, anti-crease agents, dye transfer inhibitors, antimicrobial active ingredients, germicides, fungicides, antioxidants, antistatic agents, ironing aids, repellants and impregnating agents, anti-swelling and anti-slip agents, UV absorbers and mixtures thereof.

8. The method according to claim 7, **characterized in that** the textile care compound is a textile-softening compound, preferably selected from polysiloxanes, textile-softening clays, cationic polymers and mixtures thereof.

9. A solid, particulate composition, **characterized in that** it has been prepared according to a method according to claim 1.

10. The solid, particulate composition according to claim 9, **characterized in that** the particles are spherical, figurative, scaled, cuboid, cylindrical, conical, spherical-cap-shaped or lenticular, hemispherical, disk-shaped or acicular.

11. The use of the solid, particulate composition according to claim 9 or 10 as a textile care agent, preferably a fragrancing agent and/or softener, for fragrancing and/or conditioning textile fabrics.

12. A washing or cleaning agent comprising a solid, particulate composition according to claim 9 or 10.

## Revendications

1. Procédé de préparation d'une composition particulaire solide, **caractérisé en ce qu'**une composition de dispersion fusible soluble dans l'eau ou dispersible dans l'eau, comprenant

(a) 50 à 78 % en poids, par rapport au poids total de la composition, d'au moins un polymère de support soluble dans l'eau ou dispersible dans l'eau et avec un point de fusion > 30 °C jusqu'à 250 °C, de préférence > 40 °C jusqu'à 150 °C, choisi parmi le polyéthylène glycol, et
(b) i) 0,1 à 25,0 % en poids, par rapport au poids total de la composition, d'un acide silicique et ii) 0 à 29,9 % en poids, par rapport au poids total de la composition, d'un solide différent et/ou d'une charge différente, la somme de i) et ii) étant d'au plus 30,0 % en poids, sur la base du poids total de la composition,

(c) 0,1 % en poids à 20 % en poids d'au moins un parfum à l'état fondu étant contenu ; l'au moins un parfum étant utilisé sous la forme de capsules de parfum et/ou d'huiles parfumées ; et
(d) la composition contenant en outre au moins un colorant en une concentration comprise entre 0,001 et 0,5 % en poids par rapport au poids total de la composition ; et
(e) la composition présentant, dans une plage de température jusqu'à 20 °C au-dessus du point de figeage, une dépendance à la température relative de la viscosité v dans une plage de -2,0 %/°C à +2,0 %/°C, de préférence de -1,5 %/°C à +1,5 %/°C, encore plus préférablement de -1,0 %/°C à +1,0 %/°C,

est figée, le figeage s'effectuant de préférence au moyen d'une mise en forme en pastilles ou en gouttes.

2. Procédé selon la revendication 1, **caractérisé en ce que** la composition sous forme de dispersion solide comprend i) 0,2 à 15 % en poids, plus préférablement 0,5 à 9 % en poids, le plus préférablement 0,5 à 3,0 % en poids, par rapport au poids total de la composition, d'un acide silicique, de préférence d'un acide silicique pyrogéné et/ou un d'acide silicique précipité, de manière particulièrement préférée d'un acide silicique pyrogéné et ii) 0 à 29,9 % en poids, par rapport au poids total de la composition, d'au moins un solide différent et/ou d'une charge différente, de préférence choisis parmi les silicates, en particulier les silicates alcalins, les sels inorganiques, tels qu'en particulier les sulfates, les halogénures, les carbonates et les phosphates, le glycérol, ainsi que les alcools gras, les alcoxylates d'alcools gras, les sulfates d'alcools gras, les éthers sulfates d'alcools gras, les sulfonates d'alkyl benzène et leurs mélanges, la somme de i) et ii) étant d'au plus 30,0 % en poids par rapport au poids total de la composition.

3. Procédé selon l'une des revendications précédentes, **caractérisé en ce que** la composition contient 1 à 15 % en poids, plus préférablement 3 à 12 % en poids, d'au moins un parfum à l'état fondu ; l'au moins un parfum étant utilisé sous la forme de capsules de parfum et/ou d'huiles parfumées.

4. Procédé selon l'une des revendications précédentes, **caractérisé en ce que** l'acide silicique, en particulier l'acide silicique pyrogéné

(A) est contenu dans la composition en une quantité de 1 à 2,5 % en poids, plus préférablement de 1,2 à 2,0 % en poids ; et/ou
(B) présente une surface BET supérieure à 50 $m^2/g$, de préférence supérieure à 100 $m^2/g$, plus préférablement de 150 à 250 $m^2/g$, en particulier de 175 à 225 $m^2/g$.

5. Procédé selon l'une des revendications précédentes, **caractérisé en ce que** la composition contient un colorant en une concentration de 0,01 à 0,3 % en poids par rapport au poids total de la composition.

6. Procédé selon l'une des revendications précédentes, **caractérisé en ce que** le polymère de support soluble dans l'eau

(A) présente un point de figeage de 48 °C à 120 °C, de préférence de 48 °C à 80 °C ; et/ou
(B) présente une masse moléculaire moyenne (Mn) > 1 000 g/mol, en particulier > 1 500 g/mol, de préférence entre 3 000 et 15 000, plus préférablement entre 4 000 et 13 000, de manière plus préférée entre 4 000 et 6 000, 6 000 et 8 000 ou 9000 et 12 000 et de manière particulièrement préférée d'environ 4 000 ou d'environ 6 000 g/mol ; et/ou
(C) est contenu dans la composition en une quantité de 60 à 78 % en poids, par exemple de 65 à 75 % en poids, par rapport au poids total de la composition.

7. Procédé selon l'une des revendications précédentes, **caractérisé en ce que** la composition contient en outre au moins un composé d'entretien des textiles, ledit composé d'entretien des textiles étant de préférence choisi parmi les composés adoucisseurs de textiles, les huiles de silicone, les agents anti-redéposition, les azurants optiques, les inhibiteurs de grisonnement, les agents anti-rétrécissement, les agents anti-froissage, les inhibiteurs de transfert de couleur, les substances antimicrobiennes, les germicides, les fongicides, les antioxydants, les antistatiques, les auxiliaires de repassage, les agents d'étanchéité et d'imprégnation, les agents gonflants et antidérapants, les absorbeurs d'UV ainsi que leurs mélanges.

8. Procédé selon la revendication 7, **caractérisé en ce que** le composé d'entretien des textiles est un composé adoucisseur de textiles, choisi de préférence parmi les polysiloxanes, les argiles adoucissant les textiles, les polymères cationiques et leurs mélanges, en particulier est de la bentonite.

9. Composition particulaire solide, **caractérisée en ce qu'**elle a été préparée selon un procédé selon la revendication 1.

10. Composition particulaire solide selon la revendication 9, **caractérisée en ce qu'**elle contient des particules sphériques, figurées, en forme de flocon, cubiques, cylindriques, coniques, en forme de calotte sphérique ou en forme de lentille, hémisphériques, en forme de disque ou en forme d'aiguille.

11. Utilisation de la composition particulaire solide selon l'une des revendications 9 ou 10 en tant qu'agent d'entretien des textiles, de préférence agent parfumant et/ou assouplissant, pour parfumer et/ou conditionner des tissus textiles.

12. Agent de lavage ou agent de nettoyage comprenant une composition particulaire solide selon l'une des revendications 9 ou 10.

Figuren

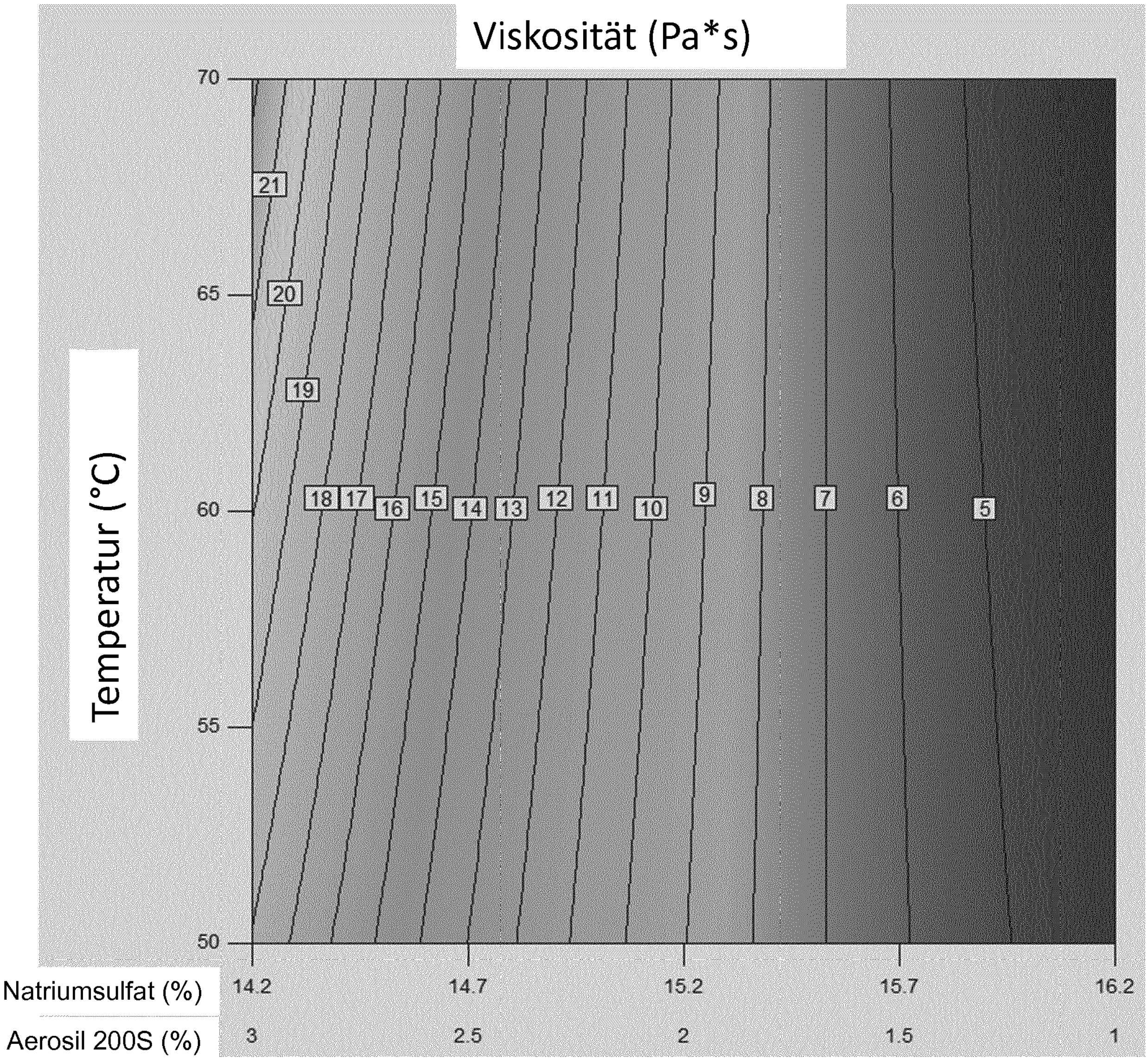


Figur 1

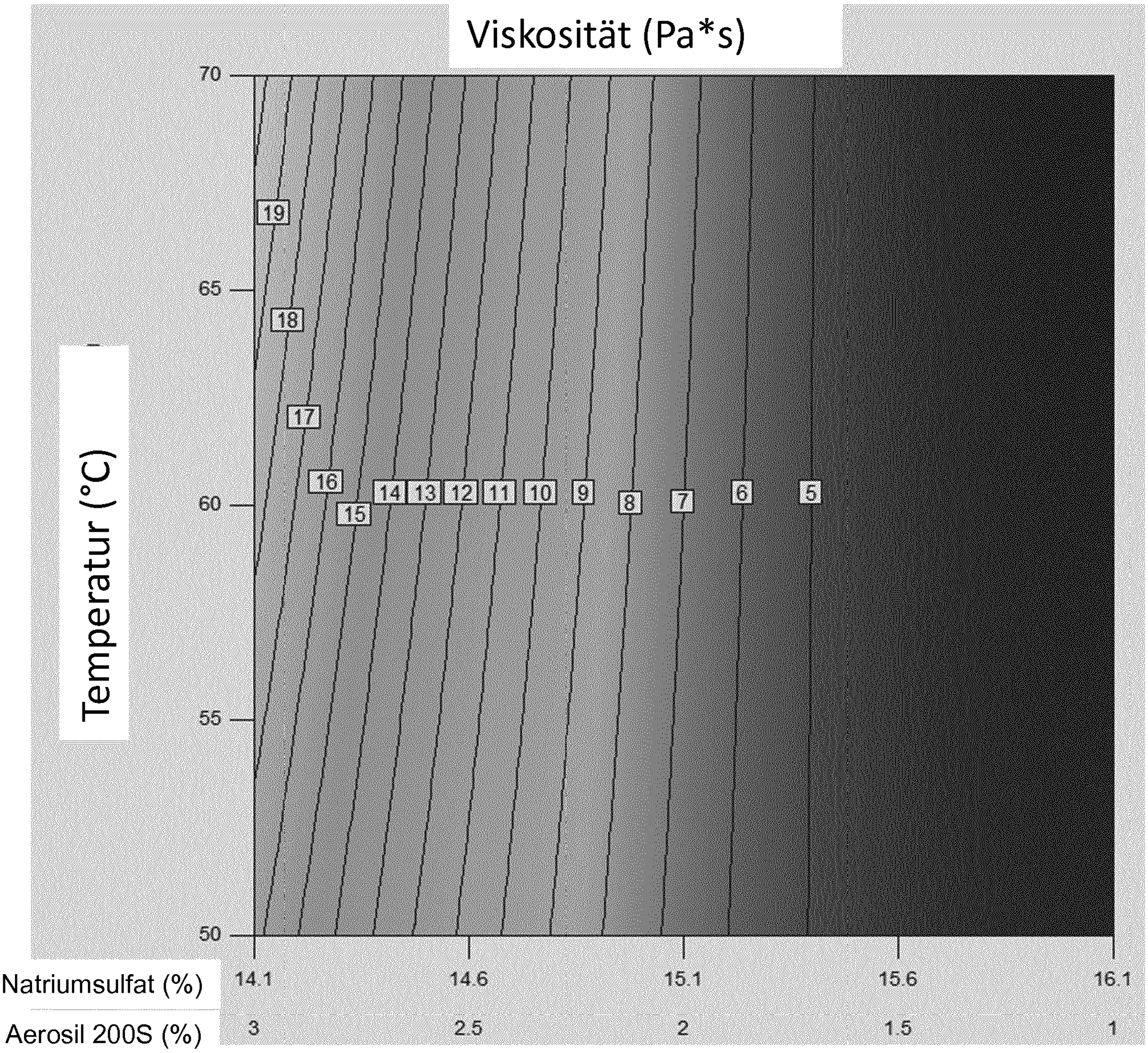
Viskosität (Pa*s)
Temperatur (°C)
70
65
60
55
50
19
18
17
16
15
14
13
12
11
10
9
8
7
6
5
Natriumsulfat (%)
14.1
14.6
15.1
15.6
16.1
Aerosil 200S (%)
3
2.5
2
1.5
1

Figur 2

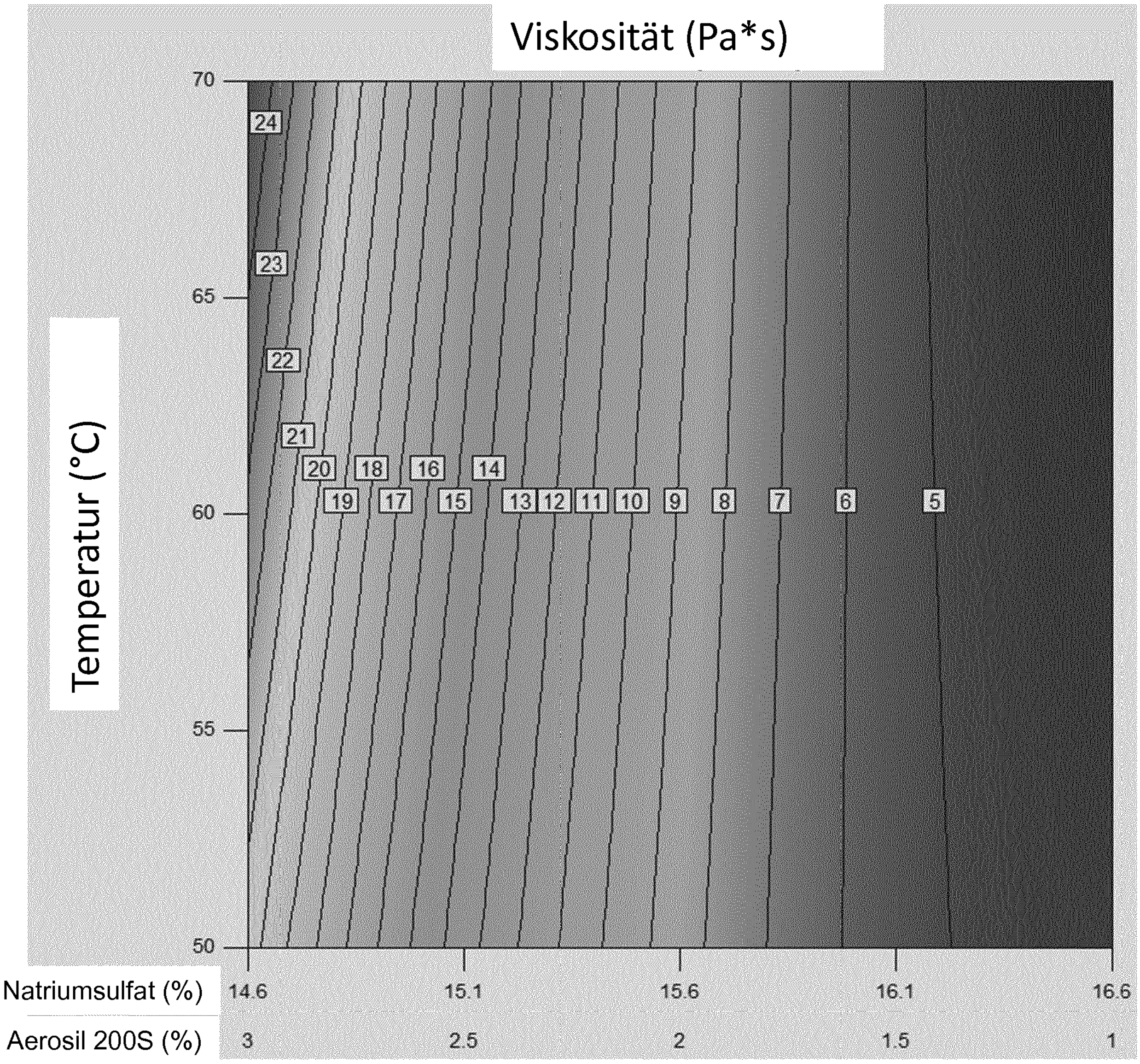
Viskosität (Pa*s)
Temperatur (°C)
70
65
60
55
50
24
23
22
21
20
18
16
14
19
17
15
13
12
11
10
9
8
7
6
5
Natriumsulfat (%)
14.6
15.1
15.6
16.1
16.6
Aerosil 200S (%)
3
2.5
2
1.5
1

Figur 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009133163 A1
- WO 2009135928 A1
- WO 9749381 A1
- EP 266796 A1
- US 2008013169 A1
- WO 2014099879 A1


### In der Beschreibung aufgeführte Nicht-Patentliteratur


- *CHEMICAL ABSTRACTS,* 541-91-3
- *CHEMICAL ABSTRACTS,* 41724-19-0
- CTFA International Cosmetic Ingredient Dictionary. Cosmetic, Toiletry, and Fragrance Association, 1991
- *CHEMICAL ABSTRACTS,* 68518-54-7
- *CHEMICAL ABSTRACTS,* 63451-27-4
- *CHEMICAL ABSTRACTS,* 92183-41-0
- *CHEMICAL ABSTRACTS,* 26006-22-4
- *CHEMICAL ABSTRACTS,* 26062-79-3
- *CHEMICAL ABSTRACTS,* 26590-05-6
- *CHEMICAL ABSTRACTS,* 53633-54-8
- *CHEMICAL ABSTRACTS,* 68877-50-9
- *CHEMICAL ABSTRACTS,* 68877-47-4
- *CHEMICAL ABSTRACTS,* 27103-90-8
- *CHEMICAL ABSTRACTS,* 35429-19-7
- *CHEMICAL ABSTRACTS,* 95144-24-4
- *CHEMICAL ABSTRACTS,* 90624-75-2
- *CHEMICAL ABSTRACTS,* 102523-94-4
- *CHEMICAL ABSTRACTS,* 53694-17-0
- *CHEMICAL ABSTRACTS,* 107987-23-5
- *CHEMICAL ABSTRACTS,* 131954-48-8
- *CHEMICAL ABSTRACTS,* 136505-02-7
- *CHEMICAL ABSTRACTS,* 26161-33-1
- *CHEMICAL ABSTRACTS,* 150595-70-5
- *CHEMICAL ABSTRACTS,* 827346-45-2